# EUROPEAN PATENT APPLICATION

(11) **EP 4 711 991 A1**
(43) Date of publication of application: **18.03.2026**
(21) Application number: 24814416.4
(22) Date of filing: 28.05.2024
(51) Int. Cl.: G06N 20/00

(54) **DATA PROCESSING METHOD, MODEL TRAINING METHOD, AND RELATED DEVICE**

(30) Priority: 30.05.2023 CN 202310627237
(71) Applicant: Huawei Technologies Co., Ltd., Shenzhen, Guangdong 518129 (CN)
(72) Inventor: LANG, Zhiqiang, Shenzhen, Guangdong 518129 (CN); LI, Yong, Shenzhen, Guangdong 518129 (CN); CHEN, Chang, Shenzhen, Guangdong 518129 (CN); SONG, Fenglong, Shenzhen, Guangdong 518129 (CN)
(74) Representative: Epping - Hermann - Fischer
(86) International application number: PCT/CN2024/095693
(87) International publication number: WO 2024/245219

(57) **Abstract**

A data processing method, a model training method, and a related device are provided. The method may be applied to a multi-task processing scenario in the field of artificial intelligence. The method includes: obtaining first data and first information, where the first information indicates at least one task executed on the first data; and inputting the first data and the first information into a first machine learning model, and processing the first data by using the first machine learning model, to obtain at least one prediction result that is output by the first machine learning model and that is in a one-to-one correspondence with the at least one task. To be precise, the first machine learning model can learn of, based on the first information, specific tasks that need to be executed on the first data, so that a required task can be adaptively executed on the first data, thereby avoiding generating a redundant prediction result and avoiding a waste of computer resources.

## Description

This application claims priority to Chinese Patent Application No. 202310627237.1, filed with the China National Intellectual Property Administration on May 30, 2023 and entitled "DATA PROCESSING METHOD, MODEL TRAINING METHOD, AND RELATED DEVICE", which is incorporated herein by reference in its entirety.

### TECHNICAL FIELD

This application relates to the field of artificial intelligence, and in particular, to a data processing method, a model training method, and a related device.

### BACKGROUND

Artificial intelligence (Artificial Intelligence, AI) is a theory, a method, a technology, and an application system that simulates, extends, and expands human intelligence by using a digital computer or a machine controlled by a digital computer, to perceive an environment, obtain knowledge, and uses the knowledge to obtain an optimal result. In other words, artificial intelligence is a branch of computer science, and attempts to understand essence of intelligence and produce a new intelligent machine that can react in a manner similar to human intelligence. Artificial intelligence is to study design principles and implementation methods of various intelligent machines, so that the machines have perception, inference, and decision-making functions. It is a common application manner to perform data processing by using a machine learning model in an artificial intelligence technology.

In some scenarios, the machine learning model may be required to execute a plurality of tasks on same data at a same moment. A currently used manner is as follows: A machine learning model that can execute N tasks at a time is deployed on a device. When at least one of the N tasks needs to be simultaneously executed on a particular piece of data (which is subsequently referred to as "first data" for ease of description), the first data is input into the machine learning model. The machine learning model is used to execute the N tasks on the first data, to obtain N prediction results that are in a one-to-one correspondence with the N tasks, and then obtain, from the N prediction results, at least one prediction result that is actually needed.

Not all of the N tasks need to be executed each time data processing is performed on the first data by using the machine learning model. Therefore, in some cases, only some of the N prediction results generated by the machine learning model are needed, and the other prediction results are discarded, which easily causes a waste of computer resources.

### SUMMARY

Embodiments of this application provide a data processing method, a model training method, and a related device. First information is added to an input of a machine learning model, and the first machine learning model can learn of, based on the first information, specific tasks that need to be executed on the first data, so that a required task can be adaptively executed on the first data, thereby avoiding generating a redundant prediction result and avoiding a waste of computer resources.

To resolve the foregoing technical problem, embodiments of this application provide the following technical solutions.

According to a first aspect, an embodiment of this application provides a data processing method, which may be applied to a multi-task processing scenario in the field of artificial intelligence. A first machine learning model deployed on an execution device has a capability of simultaneously executing N tasks on input first data. The method includes: The execution device obtains first data and first information, where the first information indicates M tasks executed on the first data, N is an integer greater than 1, and M is an integer greater than or equal to 1. The execution device inputs the first data and the first information into the first machine learning model, and processes the first data by using the first machine learning model, to obtain M prediction results that are output by the first machine learning model and that are in a one-to-one correspondence with the M tasks.

In this implementation, the first information is added to an input of the first machine learning model, the first information indicates that at least one task needs to be executed on the first data, and the first machine learning model outputs at least one prediction result that is in a one-to-one correspondence with the at least one task. To be precise, the first machine learning model can learn of, based on the first information, specific tasks that need to be executed on the first data, so that a required task can be adaptively executed on the first data, thereby avoiding generating a redundant prediction result and avoiding a waste of computer resources.

In a possible implementation, the first information may be represented as a first vector, and the first vector may include N elements that are in a one-to-one correspondence with the N tasks. When a value of any one (which is subsequently referred to as a "target element" for ease of description) of the N elements is a first value, it indicates that one task corresponding to the target element needs to be executed on the first data. When the value of the target element is a second value, it indicates that one task corresponding to the target element does not need to be executed on the first data. The first value is different from the second value.

In a possible implementation, the first machine learning model includes a plurality of neural network layers, and the plurality of neural network layers include at least one first neural network layer. That the execution device processes the first data by using the first machine learning model includes: The execution device determines, based on the first information, a parameter used by each first neural network layer. Optionally, when different first information is input, parameters used by the first neural network layers may be different. Because a type of an operation performed by using each first neural network layer is preset, after determining a parameter used by any neural network layer, the execution device may process second data by using the first neural network layer and based on the parameter used by the first neural network layer, to obtain a processing result that is of the second data and that is generated by the first neural network layer. The second data is the first data or feature information of the first data. For example, if any first neural network layer (which is subsequently referred to as a "target neural network layer" for ease of description) is a 1^{st} neural network layer used when the first machine learning model processes the first data, the second data may be the first data. If the target neural network layer is not the 1^{st} neural network layer used when the first machine learning model processes the first data, the second data may be the feature information of the first data.

In this implementation, a larger quantity of parameters used by the first machine learning model indicates that more computer resources are consumed when data processing is performed by using the first machine learning model and that more abundant information can be mined from the input first data. Correspondingly, a smaller quantity of parameters used by the first machine learning model indicates that fewer computer resources are consumed when data processing is performed by using the first machine learning model and that less information is mined from the input first data. The first machine learning model has a capability of simultaneously executing the N tasks. When all of the N tasks are executed by using the first machine learning model, each first neural network layer may use a large quantity of parameters. However, not all of the N tasks are executed by using the first machine learning model at each time (that is, the M tasks that need to be executed on the first data may be some of the N tasks). The parameter used by each first neural network layer is determined based on the first information, which helps implement adaptation between the parameter used by each first neural network layer and "the M tasks that need to be executed on the first data", to avoid a waste of computer resources.

In a possible implementation, a plurality of first neural network layers included in the first machine learning model may all be deployed in a feature extraction network of the first machine learning model. In this case, if the second data is the feature information of the first data, the processing result of the second data is updated feature information of the first data, or if the second data is the first data, the processing result of the second data is the feature information of the first data.

In this implementation, the feature extraction network of the first machine learning model consumes substantial computer resources when the first data is processed by using the first machine learning model. Therefore, adjusting, based on the first information, a parameter used by a neural network layer in the feature extraction network helps greatly reduce a waste of computer resources.

In a possible implementation, that the execution device determines, based on the first information, the parameter used by the first neural network layer includes: The execution device obtains a first parameter corresponding to the first neural network layer, and determines, based on feature information of the first information, a second parameter corresponding to the first neural network layer. The execution device determines, based on the first parameter and the second parameter, the parameter used by the first neural network layer. For example, "a first parameter corresponding to a target neural network layer (namely, any first neural network layer)" may be understood as a task-independent parameter. That is, "the first parameter corresponding to the target neural network layer" serves as a group of bases, so that regardless of which tasks in the N tasks are included in the M tasks, the "first parameter corresponding to the target neural network layer" is obtained. "A second parameter corresponding to the target neural network layer" may be understood as a task-related parameter. In this case, when the first information is different (that is, when the M tasks executed on the first data are different), the second parameter corresponding to the target neural network layer may be different.

In this implementation, a parameter used by each first neural network layer is decoupled into a task-independent parameter (that is, the first parameter) and a task-related parameter (that is, the second parameter) that correspond to the first neural network layer. After tasks that need to be executed on the input first data are determined, the task-independent parameter corresponding to the first neural network layer may be determined based on the feature information of the first information, and then a parameter finally used by each first neural network layer is determined based on the task-independent parameter and the task-related parameter. Because the first information affects the second parameter corresponding to each first neural network layer, this manner helps implement adaptation between the parameter used by each first neural network layer and the first information. In addition, regardless of specific tasks that need to be executed on the input first data, the first parameter corresponding to each first neural network layer remains unchanged. This not only helps improve stability of the parameter used by each first neural network layer, but also helps reduce difficulty in a training process of the first machine learning model.

In a possible implementation, that the execution device processes the first data by using the first machine learning model includes: The execution device fuses first feature information of the first data and second feature information of the first data, to obtain updated first feature information. The updated first feature information is used to obtain a first prediction result, and the first prediction result is one of the at least one prediction result that corresponds to a first task. The first feature information corresponds to the first task, the second feature information corresponds to a second task, the first task is any one of the at least one task, and the second task is a task other than the first task in the at least one task. In this implementation, second feature information corresponding to another task (namely, the second task) is fused into the first feature information corresponding to the first task, to obtain updated first feature information. This helps a feature processing network corresponding to the first task obtain richer information, and further helps improve accuracy of a prediction result output by the first machine learning model.

In a possible implementation, that the execution device fuses the first feature information of the first data and the second feature information of the first data, to obtain the updated first feature information includes: The execution device fuses the first feature information and the second feature information based on an attention mechanism, to obtain the updated first feature information. In this implementation, the second feature information is fused into the first feature information, so that more abundant information is carried in the updated first feature information. In addition, the fusion process is performed based on the attention mechanism, so that the updated first feature information pays more attention to information of interest, thereby improving accuracy of a prediction result output by the first machine learning model.

In a possible implementation, that the execution device fuses the first feature information and the second feature information based on the attention mechanism, to obtain the updated first feature information includes: The execution device generates, based on the first feature information corresponding to the first task, a first query (query) feature, a first key (key) feature, and a first value (value) feature, and generates, based on the first query feature and the first key feature, a first attention matrix corresponding to the first task. The execution device obtains a second attention matrix corresponding to the second task. The second attention matrix is obtained based on the second feature information corresponding to the second task. The execution device fuses the first attention matrix and the second attention matrix, to obtain a fusion result; and generates the updated first feature information based on the fusion result and the first value feature. For example, the execution device may multiply the first fusion result by the first value feature, to obtain the updated first feature information.

In this implementation, the first attention matrix and the first value feature are obtained based on the first feature information, the second attention matrix is obtained based on the second feature information, and the first attention matrix and the second attention matrix are fused. After a fusion result is obtained, the updated first feature information is generated based on the fusion result and the first value feature (that is, the second feature information is fused into the first feature information). In the foregoing manner, an implementation solution in which the second feature information is fused into the first feature information based on the attention mechanism is provided, which is simple and easy to operate. In addition, the foregoing fusion manner adapts to a process of updating the first feature information based on the attention mechanism, thereby further reducing implementation difficulty.

In a possible implementation, the first data is an image, and the at least one task includes any one or more of the following: image classification, object detection on the image, semantic segmentation on the image, segmentation of an attention object from the image, text recognition on the image, image instance segmentation, posture estimation on a human body in the image, or action recognition on a human body in the image. In this implementation, when the first data is an image, a possibility of a category of at least one different image processing task is provided, thereby improving a degree of integration between this solution and an actual application scenario and also improving flexibility of this solution.

According to a second aspect, an embodiment of this application provides a model training method, which may be applied to a multi-task processing scenario in the field of artificial intelligence. The method may include: A training device obtains first data and first information, where the first information indicates at least one task executed on the first data; and inputs the first data and the first information into a first machine learning model, and processes the first data by using the first machine learning model, to obtain at least one prediction result that is output by the first machine learning model and that is in a one-to-one correspondence with the at least one task. The training device trains the first machine learning model based on at least one correct result and the at least one prediction result that are in a one-to-one correspondence with the at least one task, and a loss function. The loss function indicates a similarity between a prediction result and a correct result that correspond to each of the at least one task.

In a possible implementation, the first machine learning model includes a plurality of neural network layers, and the plurality of neural network layers include at least one first neural network layer. That the training device processes the first data by using the first machine learning model includes: The training device determines, based on feature information of the first information, a parameter used by the first neural network layer; and processes second data by using the first neural network layer and based on the parameter used by the first neural network layer, to obtain a processing result that is of the second data and that is generated by the first neural network layer. The second data is the first data or feature information of the first data.

In a possible implementation, that the training device processes the first data by using the first machine learning model includes: The training device fuses first feature information of the first data and second feature information of the first data, to obtain updated first feature information. The updated first feature information is used to obtain a first prediction result, and the first prediction result is one of the at least one prediction result that corresponds to a first task. The first feature information corresponds to the first task, the second feature information corresponds to a second task, the first task is any one of the at least one task, and the second task is a task other than the first task in the at least one task.

In the second aspect of this application, the training device may be further configured to perform the steps performed by the execution device in the first aspect and the possible implementations of the first aspect. For specific implementations of the steps, meanings of nouns, and beneficial effects brought in the possible implementations of the second aspect, refer to the first aspect. Details are not described herein again.

According to a third aspect, an embodiment of this application provides a data processing apparatus, which may be applied to a multi-task processing scenario in the field of artificial intelligence. The data processing apparatus may include: an obtaining module, configured to obtain first data and first information, where the first information indicates at least one task executed on the first data; and a processing module, configured to: input the first data and the first information into a first machine learning model, and process the first data by using the first machine learning model, to obtain at least one prediction result that is output by the first machine learning model and that is in a one-to-one correspondence with the at least one task.

In the third aspect of this application, the data processing apparatus may be further configured to perform the steps performed by the execution device in the first aspect and the possible implementations of the first aspect. For specific implementations of the steps, meanings of nouns, and beneficial effect brought in the possible implementations of the third aspect, refer to the first aspect. Details are not described herein again.

According to a fourth aspect, an embodiment of this application provides a model training apparatus, which may be applied to a multi-task processing scenario in the field of artificial intelligence. The model training apparatus may include: an obtaining module, configured to obtain first data and first information, where the first information indicates at least one task executed on the first data; a processing module, configured to: input the first data and the first information into a first machine learning model, and process the first data by using the first machine learning model, to obtain at least one prediction result that is output by the first machine learning model and that is in a one-to-one correspondence with the at least one task; and a training module, configured to train the first machine learning model based on at least one correct result and the at least one prediction result that are in a one-to-one correspondence with the at least one task, and a loss function. The loss function indicates a similarity between a prediction result and a correct result that correspond to each of the at least one task.

In the fourth aspect of this application, the model training apparatus may be further configured to perform the steps performed by the execution device in the second aspect and the possible implementations of the second aspect. For specific implementations of the steps, meanings of nouns, and beneficial effect achieved in the possible implementations of the fourth aspect, refer to the second aspect. Details are not described herein again.

According to a fifth aspect, an embodiment of this application provides an execution device, including a processor and a memory. The processor is coupled to the memory, the memory is configured to store a program, and the processor is configured to execute the program in the memory, to enable the execution device to perform the data processing method according to the first aspect.

According to a sixth aspect, an embodiment of this application provides a training device, including a processor and a memory. The processor is coupled to the memory, the memory is configured to store a program, and the processor is configured to execute the program in the memory, to enable the training device to perform the model training method according to the second aspect.

According to a seventh aspect, an embodiment of this application provides a computer-readable storage medium. The computer-readable storage medium stores a computer program, and when the computer program is run on a computer, the computer is enabled to perform the method according to the first aspect or the second aspect.

According to an eighth aspect, an embodiment of this application provides a computer program product. The computer program product includes a program. When the program is run on a computer, the computer is enabled to perform the method according to the first aspect or the second aspect.

According to a ninth aspect, this application provides a chip system. The chip system includes a processor, configured to implement functions in the foregoing aspects, for example, sending or processing data and/or information in the foregoing methods. In a possible design, the chip system further includes a memory. The memory is configured to store program instructions and data that are necessary for a terminal device or a communication device. The chip system may include a chip, or may include a chip and another discrete component.

### BRIEF DESCRIPTION OF DRAWINGS

FIG. 1 is a diagram of a structure of an artificial intelligence main framework according to an embodiment of this application;
FIG. 2 is a diagram of a system architecture of a data processing system according to an embodiment of this application;
FIG. 3 is a schematic flowchart of a data processing method according to an embodiment of this application;
FIG. 4 is another schematic flowchart of a data processing method according to an embodiment of this application;
FIG. 5 is a diagram of performing feature extraction on second data by using any first neural network layer according to an embodiment of this application;
FIG. 6 is a diagram of performing an operation in a first feature extraction stage by using a first machine learning model according to an embodiment of this application;
FIG. 7 is a diagram of obtaining a first attention matrix and a first value feature based on first feature information according to an embodiment of this application;
FIG. 8 is a diagram of performing an operation in a second feature extraction stage by using a first machine learning model according to an embodiment of this application;
FIG. 9 is a diagram of a first machine learning model according to an embodiment of this application;
FIG. 10 is a diagram of a residual network according to an embodiment of this application;
FIG. 11 is a diagram of a structure of each residual block according to an embodiment of this application;
FIG. 12 is a diagram of a neural network used when a first feature extraction stage is executed by using a feature extraction network of a first machine learning model according to an embodiment of this application;
FIG. 13 is a schematic flowchart of a model training method according to an embodiment of this application;
FIG. 14 is a diagram of a structure of a data processing apparatus according to an embodiment of this application;
FIG. 15 is a diagram of a structure of a model training apparatus according to an embodiment of this application;
FIG. 16 is a diagram of another structure of an execution device according to an embodiment of this application;
FIG. 17 is a diagram of another structure of a training device according to an embodiment of this application; and
FIG. 18 is a diagram of a structure of a chip according to an embodiment of this application.

### DESCRIPTION OF EMBODIMENTS

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain", and any other variants mean to cover a non-exclusive inclusion, so that a process, method, system, product, or device that includes a series of units is not necessarily limited to those units, but may include other units not expressly listed or inherent to such a process, method, product, or device.

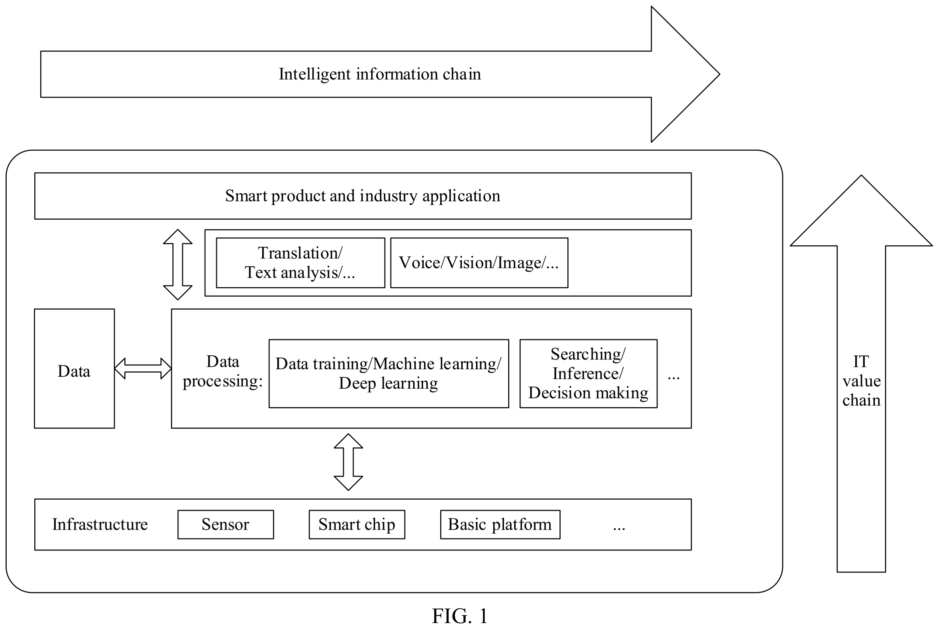

An overall working procedure of an artificial intelligence system is first described. FIG. 1 is a diagram of a structure of an artificial intelligence main framework. The following describes the artificial intelligence main framework from two dimensions: an "intelligent information chain" (a horizontal axis) and an "IT value chain" (a vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

### (1) Infrastructure

The infrastructure provides computing capability support for the artificial intelligence system, implements communication with the external world, and implements support by using a basic platform. The infrastructure communicates with the outside through a sensor. A computing capability is provided by a smart chip. The smart chip may be specifically a hardware acceleration chip such as a central processing unit (central processing unit, CPU), an embedded neural-network processing unit (neural-network processing unit, NPU), a graphics processing unit (graphics processing unit, GPU), an application-specific integrated circuit (application-specific integrated circuit, ASIC), or a field programmable gate array (field programmable gate array, FPGA). The basic platform includes related platform assurance and support such as a distributed computing framework and a network, and may include cloud storage and computing, an interconnection network, and the like. For example, the sensor communicates with the outside to obtain data, and the data is provided to a smart chip in a distributed computing system provided by the basic platform for computing.

### (2) Data

Data at an upper layer of the infrastructure indicates a data source in the field of artificial intelligence. The data relates to a graph, an image, a speech, and a text, further relates to Internet of things data of a conventional device, and includes service data of an existing system and perception data such as force, displacement, a liquid level, a temperature, and humidity.

### (3) Data processing

Data processing usually includes data training, machine learning, deep learning, searching, inference, decision making, and the like.

Machine learning and deep learning may mean performing symbolic and formal intelligent information modeling, extraction, preprocessing, training, and the like on data.

Inference is a process in which human intelligent inference is simulated in a computer or an intelligent system, and machine thinking and problem resolving are performed by using formalized information according to an inference control policy. A typical function is searching and matching. Decision making is a process of making a decision after intelligent information is inferred, and usually provides functions such as classification, ranking, and prediction.

### (4) General capability

After data processing mentioned above is performed on the data, some general capabilities may be further formed based on a data processing result. For example, the general capabilities may be an algorithm or a general system such as translation, text analysis, computer vision processing, speech recognition, and image recognition.

### (5) Smart product and industry application

The smart product and the industry application are products and applications of the artificial intelligence system in various fields, and are encapsulation for an overall solution of the artificial intelligence, to productize intelligent information decision-making and implement applications. Application fields thereof mainly include a smart terminal, smart manufacturing, smart transportation, a smart home device, smart healthcare, smart security protection, autonomous driving, a smart city, and the like.

The method provided in this application may be applied to various application fields of artificial intelligence, and optionally, is applied to an application scenario in which one or more tasks may need to be simultaneously completed for same data. The foregoing one or more tasks may all be image processing tasks; or the foregoing one or more tasks may all be visual perception tasks; or the foregoing one or more tasks may all be natural language processing (natural language processing, NLP) tasks related to speech semantics, or the like. The following uses a plurality of application scenarios of this application as an example.

### Application scenario 1: image processing task

For example, in the field of smart terminals, when a user takes a photo or records a video using a mobile phone, the mobile phone may execute one or more image classification tasks and object detection tasks on an image of a photographing scene captured by a camera. A purpose of executing the image classification task is to identify a category of the photographing scene. "The category of the photographing scene" may include night photography, scenery photography, food photography, another category, or the like. A purpose of executing the object detection task is to determine a category and a location of an object in the photographing scene. For example, the category of the object in the photographing scene may include a person, an animal, a flower, another category, or the like. The mobile phone may automatically determine, based on the category of the photographing scene and the category of the object in the photographing scene, a photographing mode that adapts to the current photographing scene.

For another example, in the field of smart terminals, when conducting an online conference using a computer, the user may extract content of a particular video frame in the online conference. In this case, the computer may perform object detection on the video frame to determine a text area and an image area that are included in the video frame, and may simultaneously perform, based on a result of the object detection, the following tasks on the video frame: performing semantic segmentation on the video frame to extract an image from the video frame in a timely manner; performing text recognition on the text area of the video frame to extract a text from the video frame in a timely manner; and performing table recognition on the text area of the video frame to extract a table from the video frame in a timely manner.

For another example, in the field of smart terminals, when the user performs physical movements following an action displayed on a smart display, a processor of the smart display may capture an image of the user using a camera, and execute a user identification task and a human body action recognition task based on the image of the user, to provide timely feedback to the user in case of incorrect actions of the user.

### Application scenario 2: natural language processing task

Natural language processing is processing of human languages. Natural language processing is a process in which a first machine learning model is used to perform systematic analysis, understanding, and information extraction of text data. In application fields such as a smart terminal, a smart home device, and autonomous driving, a machine learning model may be used to simultaneously execute a plurality of natural language processing tasks on same data.

In the foregoing various application fields, by using the machine learning model, massive chunks of text data can be managed, or numerous automated tasks can be performed, and various problems such as automatic summarization (automatic summarization), machine translation (machine translation, MT), named entity recognition (named entity recognition, NER), relation extraction (relation extraction, RE), information extraction (information extraction, IE), sentiment analysis, speech recognition (speech recognition), a question answering (question answering) system, and topic segmentation can be solved.

For example, there may be the following several types of natural language processing tasks.

Sequence labeling: A machine learning model needs to provide a classification category for each word in a text based on context. Examples include Chinese word segmentation, part-of-speech tagging, named entity recognition, or semantic role labeling.

Classification task: The machine learning model outputs a classification value for an entire input text. Examples include sentiment classification, topic classification, or whether syntax is used correctly.

Sentence relationship inference: Two texts are input into the machine learning model. The machine learning model is used to determine whether the two texts have a nominal relationship. Examples include question answering, semantic rewriting, or natural language inference.

Generative task: One segment of text is input, and another segment of text is generated by using the machine learning model. Examples include machine translation, automatic summarization, or poetry composition and sentence generation.

Information extraction task: At least one category of information is obtained from an input text by using the machine learning model.

For example, when individuals from different countries participate in a meeting, a given text may need to be translated into a plurality of languages. In this case, a plurality of machine translation tasks need to be simultaneously executed on the text, and each of the plurality of machine translation tasks is used to translate the text into a language.

It should be noted that the method provided in this application may be further applied to another scenario. The foregoing examples of various application scenarios in this application are merely for ease of understanding of this solution, and are not intended to limit this solution.

In a plurality of scenarios, there exists a need to execute N tasks for same first data, where N is an integer greater than or equal to 2. In this case, a first machine learning model deployed on a device may be a machine learning model that can simultaneously execute the N tasks. However, execution frequencies of the N tasks may vary. Therefore, each time the first machine learning model is invoked, it is not necessary to execute all of the N tasks on the first data input into the first machine learning model.

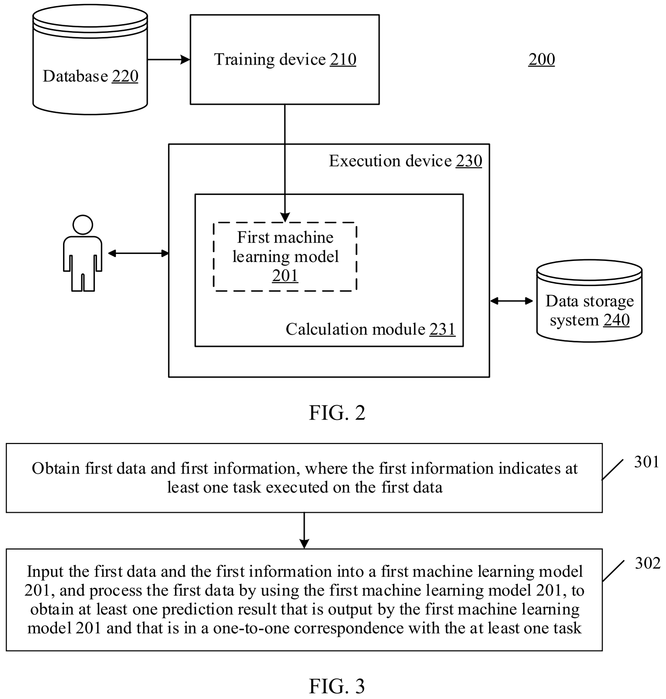

To avoid a waste of computer resources, this application provides a data processing method. Before the method provided in this application is described in detail, refer to FIG. 2. FIG. 2 is a diagram of a system architecture of a data processing system according to an embodiment of this application. In FIG. 2, the data processing system 200 includes a training device 210, a database 220, an execution device 230, and a data storage system 240. The execution device 230 includes a calculation module 231.

In a training stage of a first machine learning model 201, the database 220 stores a training data set. The training device 210 generates the first machine learning model 201, and performs iterative training on the first machine learning model 201 by using the training data set, to obtain the trained first machine learning model 201. The first machine learning model 201 may be specifically represented as a neural network, or may be represented as a non-neural network model. In this embodiment of this application, descriptions are provided only by using an example in which the first machine learning model 201 is represented as a neural network.

A first convolutional neural network and a second convolutional neural network that are obtained by the training device 210 may be applied to different systems or devices, for example, a mobile phone, a tablet, a notebook computer, a virtual reality (virtual reality, VR) device, a monitoring system, and a radar data processing system. The execution device 230 may invoke data, code, and the like in the data storage system 240, and may also store data, instructions, and the like into the data storage system 240. The data storage system 240 may be disposed in the execution device 230, or the data storage system 240 may be an external memory relative to the execution device 230.

In an application stage of the first machine learning model 201, after determining that at least one task needs to be executed on the first data, the execution device 230 may generate, by using the first machine learning model 201, at least one prediction result that is in a one-to-one correspondence with the at least one task. Specifically, refer to FIG. 3. FIG. 3 is a diagram of a data processing method according to an embodiment of this application. 301: The execution device 230 obtains first data and first information, where the first information indicates at least one task executed on the first data.

302: The execution device 230 inputs the first data and the first information into the first machine learning model 201, and processes the first data by using the first machine learning model 201, to obtain at least one prediction result that is output by the first machine learning model 201 and that is in a one-to-one correspondence with the at least one task.

In this embodiment of this application, the first information is added to an input of the first machine learning model 201, the first information indicates that at least one task needs to be executed on the first data, and the first machine learning model 201 outputs at least one prediction result that is in a one-to-one correspondence with the at least one task. To be precise, the first machine learning model 201 can learn of, based on the first information, specific tasks that need to be executed on the first data, so that a required task can be adaptively executed on the first data, thereby avoiding generating a redundant prediction result and avoiding a waste of computer resources.

In some embodiments of this application, refer to FIG. 2. The execution device 230 and a client device may be integrated into a same device, and the user may directly interact with the execution device 230. For example, when the client device is a mobile phone or a tablet, the execution device 230 may be a module that is in a host processor (Host CPU) of the mobile phone or the tablet and that performs data processing by using the first machine learning model. Alternatively, the execution device 230 may be a graphics processing unit (graphics processing unit, GPU) or a neural network processor (NPU) in the mobile phone or the tablet. The GPU or the NPU is mounted to a host processor as a coprocessor, and the host processor assigns a task.

It should be noted that FIG. 2 is merely a diagram of architectures of two data processing systems according to an embodiment of the present invention, and position relationships between devices, components, modules, and the like shown in the figure constitute no limitation. For example, in some other embodiments of this application, the execution device 230 and the client device may be separate and independent devices. The execution device 230 is equipped with an input/output (I/O) interface and exchanges data with the client device. After the client device determines the first data and the first information, the client device sends the first data and the first information to the execution device 230 through the I/O interface. After generating, by using the first machine learning model/rule 201 in the calculation module 231, the at least one prediction result that is in a one-to-one correspondence with the at least one task, the execution device 230 may return the prediction result to the client device through the I/O interface, and provide the prediction result to the user.

With reference to the foregoing descriptions, the following starts to describe specific implementation processes of a training stage and an application stage of the method provided in embodiments of this application.

### 1. Application stage

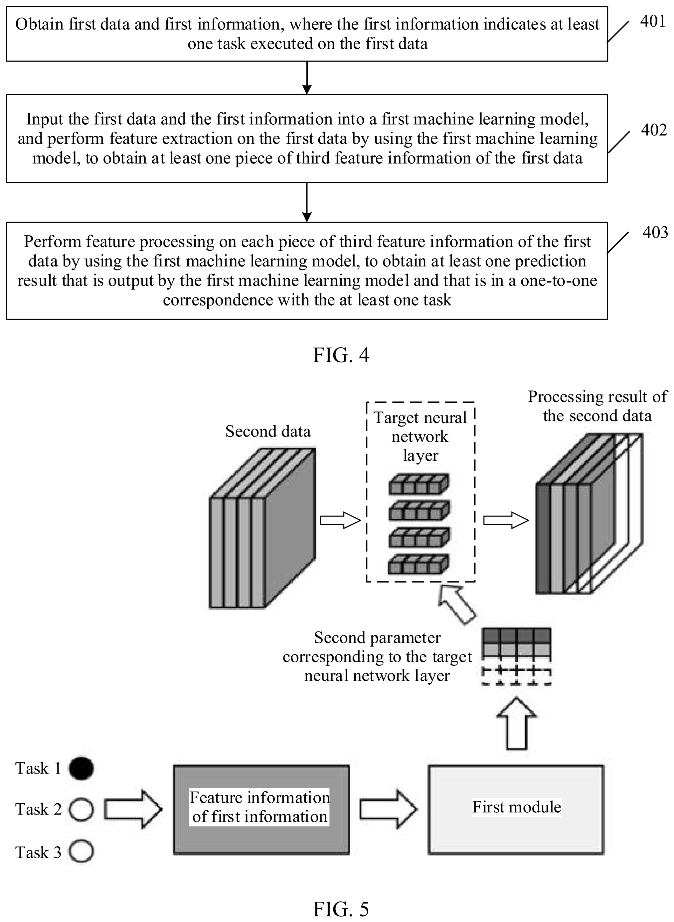

In this embodiment of this application, the application stage describes a process in which the execution device 230 processes the first data by using the first machine learning model 201 on which the training operation has been performed. Specifically, refer to FIG. 4. FIG. 4 is another schematic flowchart of a data processing method according to an embodiment of this application. The data processing method provided in this embodiment of this application may include the following steps.

401: Obtain first data and first information, where the first information indicates at least one task executed on the first data.

In this embodiment of this application, the first machine learning model deployed on the execution device has a capability of simultaneously executing N tasks on the input first data. After which tasks in the N tasks need to be executed on the first data is determined, the first data and the first information may be obtained. The first information indicates that M tasks in the N tasks need to be executed on the first data, where N is an integer greater than 1, and M is an integer greater than or equal to 1.

For example, if the first data is an image, both the "N tasks" and the "M tasks in the N tasks" may be image processing tasks, and the "N tasks" include N different image processing tasks. For example, categories of the N different image processing task may include any one or more of the following: image classification, object detection on the image, semantic segmentation on the image, segmentation of an attention object from the image, text recognition on the image, image instance segmentation, posture estimation on a human body in the image, action recognition on a human body in the image, another task performed on the image, or the like. Specific tasks included in the N tasks need to be flexibly determined with reference to an actual application scenario. This is not limited in this embodiment of this application. When the first data is an image, a possibility of categories of the N different image processing tasks is provided, thereby improving a degree of integration between this solution and an actual application scenario and also improving flexibility of this solution.

If the first data is a text, both the N tasks and the M tasks may be text-related natural language processing tasks, and the N tasks include N different text-related natural language processing tasks. If the first data is audio, the N tasks and the M tasks may all be audio processing tasks, and the N tasks include N different text-related audio processing tasks and the like. When the first data is represented in another form, the N tasks and the M tasks may all be tasks for processing the first data in another form, and the like. This is not exhaustive in this embodiment of this application.

Optionally, the first information may be specifically represented as a first vector, and the first vector may include N elements that are in a one-to-one correspondence with the N tasks. When a value of any one (which is subsequently referred to as a "target element" for ease of description) of the N elements is a first value, it indicates that one task corresponding to the target element needs to be executed on the first data. When the value of the target element is a second value, it indicates that one task corresponding to the target element does not need to be executed on the first data. The first value is different from the second value. For example, the first value may be 1, and the second value may be 0; or the first value may be 0, and the second value may be 0; or the first value may be 1, and the second value may be 2. It should be noted that the examples herein are merely for ease of understanding of this solution, and are not intended to limit this solution.

For example, the first data is an image, a value of N is 4, and four tasks executed on the first data include: object detection on the image, semantic segmentation on the image, text recognition on the image, and segmentation of an attention object from the image. When the first information is (1, 0, 1, 0), it may indicate that a task that needs to be executed on the input first data includes: object detection on the image and text recognition on the image. When the first information is (1, 1, 0, 0), it may indicate that a task that needs to be executed on the input first data includes: object detection on the image, semantic segmentation on the image, and the like. It should be understood that an example herein is merely for ease of understanding of a concept that "the first information indicates at least one task executed on the first data", and is not intended to limit this solution.

402: Input the first data and the first information into the first machine learning model, and perform feature extraction on the first data by using the first machine learning model, to obtain at least one piece of third feature information of the first data.

In this embodiment of this application, after obtaining the first data and the first information, the execution device may input the first data and the first information into the first machine learning model, and perform feature extraction on the first data by using the first machine learning model, to obtain M pieces of third feature information of the first data that are in a one-to-one correspondence with the M tasks. It should be noted that concepts of "first feature information" and "second feature information" are described subsequently.

A feature extraction network of the first machine learning model may include a plurality of neural network layers. Optionally, the plurality of neural network layers may include one or more first neural network layers, and a parameter of each first neural network layer is determined based on the first information. In other words, the first information is used to determine a parameter used by each first neural network layer. When different first information is input, parameters used by the first neural network layers may be different.

Any first neural network layer included in the feature extraction network of the first machine learning model may be a convolutional layer (convolutional layer), a fully connected layer, a neural network layer configured to perform linear transformation, another type of neural network layer, or the like. Specifically, this may be flexibly determined with reference to an actual application scenario. This is not limited in this embodiment of this application.

For any one of at least one first neural network layer (which is subsequently referred to as a "target neural network layer" for ease of description), step 402 may include: The execution device determines, based on the first information, a parameter used by the target neural network layer.

Because a type of an operation performed by using the first neural network layer is preset, after determining a parameter used by the target neural network layer, the execution device may perform feature extraction on second data by using the first neural network layer and based on the parameter used by the first neural network layer, to obtain a processing result that is of the second data and that is generated by the first neural network layer. The second data is the first data or feature information of the first data.

If the target neural network layer is a 1^{st} neural network layer used when the first machine learning model processes the first data, the second data may be the first data, and the processing result of the second data is the feature information of the first data. If the target neural network layer is not the 1^{st} neural network layer used when the first machine learning model processes the first data, the second data may be the feature information of the first data, and the processing result of the second data may be updated feature information of the first data.

Both "the feature information of the first data" and "the updated feature information of the first data" may be understood as feature information of the first data. That is, the processing result of the second data may include feature maps (feature maps) of a plurality of channels of the first data. Optionally, when the first information is different, quantities of feature maps in the processing result that is of the second data and that is generated by the target neural network layer may be different.

For example, if the target neural network layer is a convolutional layer, when the input first information is different, sizes of convolution kernels used by the target neural network layer may be different, so that a parameter used by the target neural network layer is different. Alternatively, if the target neural network layer is a convolutional layer, when the input first information is different, quantities of convolution kernels used by the target neural network layer may be different, so that a parameter used by the target neural network layer is different, and the like. It should be noted that when the target neural network layer is represented as another type of neural network layer, the expression "parameters used by the first neural network layers are different" may also be represented in another form. An example herein is merely used to prove implementability of this solution, and is not intended to limit this solution.

The execution device may perform "determining, based on the first information, the parameter used by the target neural network layer" in a plurality of manners. In one case, the execution device performs feature extraction on the first information by using the feature extraction network of the first machine learning model, to obtain the feature information of the first information; and determines, based on the feature information of the first information, the parameter used by the target neural network layer. When the input first information is different, the parameter used by the target neural network layer may be different.

For example, the execution device may perform "determining, based on the feature information of the first information, the parameter used by the target neural network layer" in a plurality of manners. In an implementation, the execution device may obtain a first parameter corresponding to the target neural network layer; and determine, based on the feature information of the first information, a second parameter corresponding to the target neural network layer. The execution device determines, based on the first parameter and the second parameter that correspond to the target neural network layer, the parameter used by the target neural network layer. The execution device may determine, in the foregoing manner, a group of parameters used by each first neural network layer.

For example, "the first parameter corresponding to the target neural network layer" may be understood as a task-independent parameter. That is, "the first parameter corresponding to the target neural network layer" serves as a group of bases, so that regardless of which tasks in the N tasks are included in the M tasks, the "first parameter corresponding to the target neural network layer" is obtained. "The second parameter corresponding to the target neural network layer" may be understood as a task-related parameter. In this case, when the first information is different (that is, when the M tasks executed on the first data are different), the second parameter corresponding to the target neural network layer may be different.

For example, both the first parameter and the second parameter that correspond to the target neural network layer may be represented as a matrix.

For example, the feature extraction network of the first machine learning model may include one first module corresponding to the target neural network layer. The execution device may generate, based on the feature information of the first information by using the first module, the second parameter corresponding to the target neural network layer. The feature extraction network of the first machine learning model may include a first module that is in a one-to-one correspondence with the at least one first neural network layer. That is, each first neural network layer has one first module corresponding to the first neural network layer. Alternatively, a plurality of first neural network layers in the feature extraction network of the first machine learning model may share one first module. For example, if the feature extraction network of the first machine learning model includes a plurality of residual blocks (residual blocks), one residual block may include a plurality of convolutional layers, and convolutional layers in a same residual block may share one first module, and the like. It should be noted that a relationship between "the first neural network layer" and "the first module" may be set based on an actual application scenario. The example herein is merely for ease of understanding of this solution, and is not intended to limit this solution.

The execution device may perform linear weighting on the first parameter and the second parameter that correspond to the target neural network layer, to obtain the parameter used by the target neural network layer. Alternatively, the execution device may perform a dot product or addition on the first parameter and the second parameter that correspond to the target neural network layer, to obtain the parameter used by the target neural layer. Alternatively, the execution device may perform another computational operation on the first parameter and the second parameter that correspond to the target neural network layer, to obtain the parameter used by the target neural network layer. Specifically, this may be flexibly determined with reference to an actual application scenario. This is not limited in this embodiment of this application.

For more intuitive understanding of this solution, refer to FIG. 5. FIG. 5 is a diagram of performing feature extraction on second data by using any first neural network layer according to an embodiment of this application. In FIG. 5, an example in which a value of N is 3 is used. The N tasks include a task 1 (Task 1), a task 2 (Task 2), and a task 3 (Task 3), and the first information indicates the task 1, in the foregoing three tasks, that needs to be executed on the input first data. Feature extraction is performed on the first information by using the feature extraction network of the first machine learning model, to obtain the feature information of the first data. The execution device may generate, based on the feature information of the first information, the second parameter corresponding to a target neural network by using the first module that is in the first machine learning model and that corresponds to the target neural network layer (that is, any first neural network layer in the first machine learning model).

The execution device may generate, based on the second parameter and the first parameter that correspond to the target neural network layer, the parameter used by the target neural network layer. In FIG. 5, an example in which the parameter used by the target neural network layer is a 4x4 matrix is used. The 4x4 matrix is divided into parameters of four 1x4 convolution kernels. After determining the parameter used by the target neural network layer, the execution device processes the second data by using the target neural network layer, to obtain the processing result that is of the second data and that is generated by the target neural network layer. It should be understood that the example in FIG. 5 is merely for ease of understanding of this solution, and is not intended to limit this solution.

In this embodiment of this application, a parameter used by each first neural network layer is decoupled into a task-independent parameter (that is, the first parameter) and a task-related parameter (that is, the second parameter) that correspond to the first neural network layer. After tasks that need to be executed on the input first data are determined, the task-independent parameter corresponding to the first neural network layer may be determined based on the feature information of the first information, and then a parameter finally used by each first neural network layer is determined based on the task-independent parameter and the task-related parameter. Because the first information affects the second parameter corresponding to each first neural network layer, this manner helps implement adaptation between the parameter used by each first neural network layer and the first information. In addition, regardless of specific tasks that need to be executed on the input first data, the first parameter corresponding to each first neural network layer remains unchanged. This not only helps improve stability of the parameter used by each first neural network layer, but also helps reduce difficulty in a training process of the first machine learning model.

In another implementation, the execution device may directly determine, based on the feature information of the first information, the parameter used by the target neural network layer. The execution device may determine, in the foregoing manner, a group of parameters used by each first neural network layer. For example, the feature extraction network of the first machine learning model may include one second module corresponding to the target neural network layer. The execution device may generate, based on the feature information of the first information by using the second module, the parameter used by the target neural network layer. The feature extraction network of the first machine learning model may include a second module that is in a one-to-one correspondence with the at least one first neural network layer. That is, each first neural network layer has one second module corresponding to the first neural network layer. Alternatively, a plurality of first neural network layers in the feature extraction network of the first machine learning model may share one first module or the like. This is not limited in this embodiment of this application.

In another case, the execution device may be preconfigured with a plurality of groups of parameters that can be used by each first neural network layer. There is a correspondence between the plurality of groups of parameters and a plurality of combination manners corresponding to the N tasks. The plurality of groups of parameters include a group of parameters corresponding to each of the plurality of combination manners corresponding to the N tasks. For example, a value of N is 5. When the first information is represented as (0, 0, 1, 1, 1), it signifies a combination manner of five tasks. The combination manner indicates that a 3^{rd} task, a 4^{th} task, and a 5^{th} task need to be executed on the input first data. When the first information is represented as (0, 1, 0, 0, 1), it signifies a combination manner of five tasks. The combination manner indicates that a 2^{nd} task and a 5^{th} task need to be executed on the input first data. It should be understood that the examples herein are merely for ease of understanding of a concept of "the plurality of combination manners corresponding to the N tasks", and are not intended to limit this solution.

Step 402 may include: The execution device may obtain, from a plurality of groups of parameters that can be used by the target neural network layer, a group of parameters corresponding to the first information, that is, determine a group of parameters actually used by the target neural network layer; and the execution device may determine, in the foregoing manner, a group of parameters used by each first neural network layer.

In this embodiment of this application, a larger quantity of parameters used by the first machine learning model indicates that more computer resources are consumed when data processing is performed by using the first machine learning model and that more abundant information can be mined from the input first data. Correspondingly, a smaller quantity of parameters used by the first machine learning model indicates that fewer computer resources are consumed when data processing is performed by using the first machine learning model and that less information is mined from the input first data. The first machine learning model has a capability of simultaneously executing the N tasks. When all of the N tasks are executed by using the first machine learning model, each first neural network layer may use a large quantity of parameters. However, not all of the N tasks are executed by using the first machine learning model at each time (that is, the M tasks that need to be executed on the first data may be some of the N tasks). The parameter used by each first neural network layer is determined based on the first information, which helps implement adaptation between the parameter used by each first neural network layer and "the M tasks that need to be executed on the first data", to avoid a waste of computer resources. In addition, the feature extraction network of the first machine learning model consumes substantial computer resources when the first data is processed by using the first machine learning model. Therefore, adjusting, based on the first information, a parameter used by a neural network layer in the feature extraction network helps greatly reduce a waste of computer resources.

Optionally, a process in which the execution device "performs feature extraction on the first data by using the first machine learning model" may include a first feature extraction stage and a second feature extraction stage. Feature information of the first data obtained in the first feature extraction stage is feature information shared by the M tasks. The second feature extraction stage is used to separately obtain, based on the shared feature information, M pieces of third feature information of the first data that are in a one-to-one correspondence with the M tasks.

For example, all first neural network layers included in the feature extraction network of the first machine learning model may be neural network layers that perform the first feature extraction stage. Alternatively, a plurality of first neural network layers included in the feature extraction network of the first machine learning model may exist in the first feature extraction stage, or may exist in the second feature extraction stage. Alternatively, all first neural network layers included in the feature extraction network of the first machine learning model may be neural network layers that perform the second feature extraction stage.

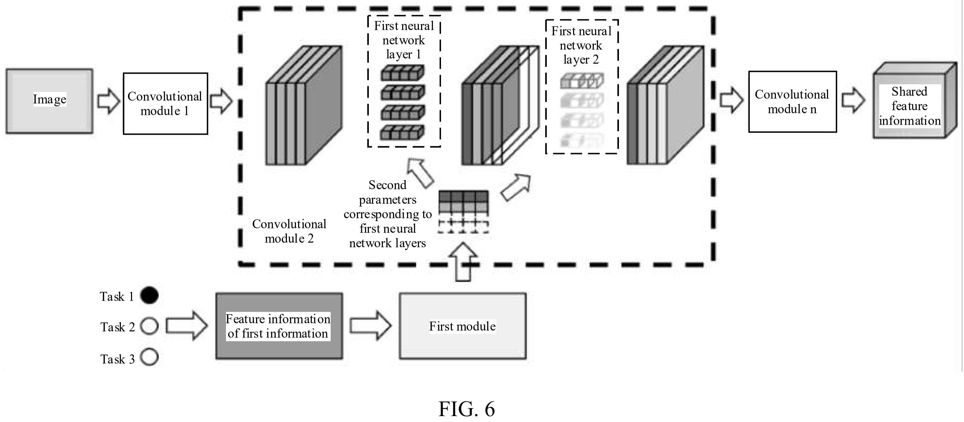

For more intuitive understanding of this solution, refer to FIG. 6. FIG. 6 is a diagram of performing an operation in the first feature extraction stage by using the first machine learning model according to an embodiment of this application. As shown in FIG. 6, a plurality of convolutional modules are used in a process of performing an operation in the first feature extraction stage on an input image (namely, an example of the first data) by using the feature extraction network of the first machine learning model. In FIG. 6, a convolutional module 2 is used as an example for description. The convolutional module 2 includes two first neural network layers: a first neural network layer 1 and a first neural network layer 2. Both the first neural network layer 1 and the first neural network layer 2 are convolutional layers used to perform a convolution operation. An input of the convolutional module 2 is feature information of the image.

Before the first neural network layer 1 is used to perform the convolution operation, the execution device first generates, based on the feature information of the first information by using the first module in the first machine learning model, a second parameter corresponding to the first neural network layer 1; determines, based on a first parameter and the second parameter that correspond to the first neural network layer 1, a parameter used by the first neural network layer 1; and then performs the convolution operation on the second data (namely, the feature information of the image input to the convolutional module 2) by using the first neural network layer 1, to obtain updated feature information of the image generated by the first neural network layer 1.

Correspondingly, before the first neural network layer 2 is used to perform the convolution operation, a second parameter corresponding to the first neural network layer 2 is first obtained. In FIG. 6, an example in which the first neural network layer 1 and the second neural network layer 2 share a same first module is used. That is, the first neural network layer 1 and the first neural network layer 2 correspond to a same second parameter. The execution device determines, based on a first parameter and the second parameter that correspond to the first neural network layer 2, a parameter used by the first neural network layer 2, and then performs the convolution operation on the second data (that is, the updated feature information of the image generated by the first neural network layer 1) by using the first neural network layer 2, to obtain updated feature information of the image generated by the first neural network layer 2.

A plurality of convolutional modules are used in a process in which the feature extraction network of the first machine learning model performs an operation in the first feature extraction stage on the input image. For a process in which another convolutional module performs a convolution operation, refer to descriptions of the convolutional module 2. A specific implementation of the another convolutional module is not described herein in detail. It should be understood that the example in FIG. 6 is merely for ease of understanding of this solution, and is not intended to limit this solution.

For example, after obtaining, by using the feature extraction network of the first machine learning model, the feature information shared by the M tasks, the execution device may separately perform a feature update on the shared feature information by using M adapters that are in a one-to-one correspondence with the M tasks, to obtain one piece of third feature information generated by each of the M adapters, that is, obtain M pieces of third feature information of the first data that are in a one-to-one correspondence with the M tasks. Each of the M adapters may include one or more neural network layers. A specific design of each adapter may be flexibly determined with reference to an actual situation. This is not limited herein.

Alternatively, after a process in which the execution device processes the first data by using the first machine learning model enters the second feature extraction stage, a process of processing any task (which is subsequently referred to as a "first task" for ease of description) of the M tasks may include: The execution device obtains, based on the feature information (namely, the shared feature information) that is of the first data and that is obtained in the first feature extraction stage, the first feature information that is of the first data and that corresponds to the first task.

The execution device fuses the first feature information of the first data and (M-1) pieces of second feature information of the first data, to obtain updated first feature information. The updated first feature information corresponding to the first task is used to obtain a first prediction result, and the first prediction result is one of at least one prediction result that corresponds to the first task. The second feature information of the first data corresponds to a second task, the first task is any one of the M tasks, and the second task is a task other than the first task in the M tasks that need to be executed on the first data.

The execution device can obtain, in the foregoing manner, updated first feature information corresponding to each of the M tasks, and the updated first feature information corresponding to each of the M tasks is determined as third feature information corresponding to the task.

Optionally, the execution device may input the shared feature information that is of the first data and that is obtained in the first feature extraction stage into a first adapter corresponding to the first task, to obtain first feature information generated by the adapter corresponding to the first task. Correspondingly, the execution device may input the shared feature information that is of the first data and that is obtained in the first feature extraction stage into a second adapter corresponding to each second task, to obtain second feature information that is generated by the adapter corresponding to each second task and that corresponds to each second task. For example, both the "first adapter" and the "second adapter" may include a plurality of neural network layers. The execution device may implement "fusing the first feature information of the first data and the (M-1) pieces of second feature information of the first data, to obtain the updated first feature information" in a plurality of manners. In an implementation, the execution device may fuse the first feature information and the (M-1) pieces of second feature information based on an attention mechanism, to obtain the updated first feature information. In this way, the second feature information is fused into the first feature information, so that more abundant information is carried in the updated first feature information. In addition, the fusion process is performed based on the attention mechanism, so that the updated first feature information pays more attention to information of interest, thereby improving accuracy of a prediction result output by the first machine learning model.

For example, in a case, the execution device may generate, based on the first feature information corresponding to the first task, a first query (query) feature, a first key (key) feature, and a first value (value) feature, and generate, based on the first query feature and the first key feature, a first attention matrix corresponding to the first task. The execution device obtains a second attention matrix corresponding to the second task. The second attention matrix is obtained based on the second feature information corresponding to the second task. The execution device fuses the first attention matrix and the second attention matrix, to obtain a first fusion result; and generates the updated first feature information based on the first fusion result and the first value feature.

The execution device may perform a first linear transformation operation on the first feature information by using a neural network layer in the feature extraction network of the first machine learning model, to obtain the first query feature; and perform a second linear transformation operation on the first feature information by using a neural network layer in the feature extraction network of the first machine learning model, to obtain the first key feature. The execution device multiplies the first query feature by the first key feature, to obtain the first attention matrix. The execution device performs a third linear transformation operation on the first feature information by using a neural network layer in the feature extraction network of the first machine learning model, to obtain the first value feature.

Optionally, any one or more of the following neural network layers may be the first neural network layer: the neural network layer that performs the first linear transformation operation on the first feature information, the neural network layer that performs the second linear transformation operation on the first feature information, or the neural network layer that performs the third linear transformation operation on the first feature information. It should be noted that for a specific implementation process of "determining, based on the first information, the parameter used by the first neural network layer", refer to the foregoing descriptions. Details are not described herein again.

Alternatively, none of the neural network layer that performs the first linear transformation operation on the first feature information, the neural network layer that performs the second linear transformation operation on the first feature information, and the neural network layer that performs the third linear transformation operation on the first feature information may be the first neural network layer. In other words, parameters of the foregoing neural network layers may be determined independently of the first information.

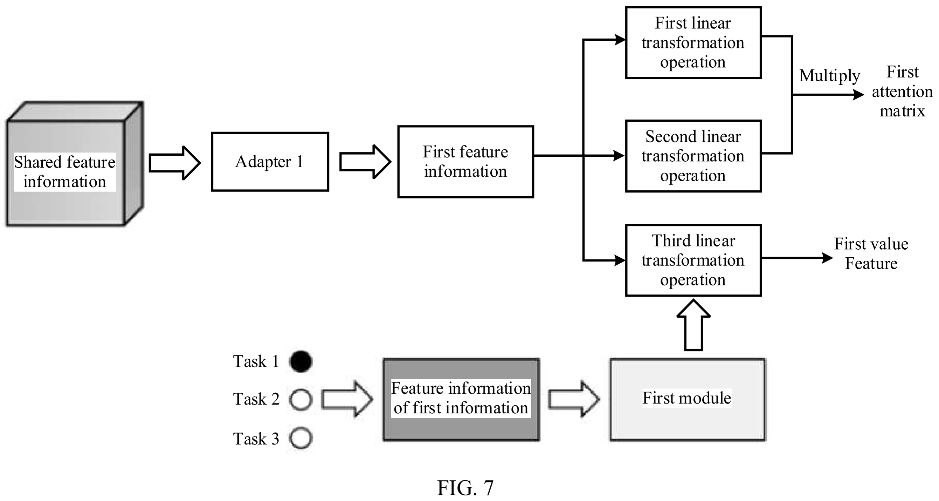

For more intuitive understanding of this solution, refer to FIG. 7. FIG. 7 is a diagram of obtaining the first attention matrix and the first value feature based on the first feature information according to an embodiment of this application. In FIG. 7, an example is used in which the neural network layer that performs the third linear transformation operation on the first feature information is the first neural network layer, and neither the neural network layer that performs the first linear transformation operation on the first feature information nor the neural network layer that performs the second linear transformation operation on the first feature information is the first neural network layer. As shown in FIG. 7, after obtaining the shared feature information, the execution device inputs the shared feature information into an adapter 1 corresponding to the task 1, to obtain first feature information corresponding to the task 1; performs the first linear transformation operation on the first feature information to obtain the first query feature; performs the second linear transformation operation on the first feature information to obtain the first key feature; and multiplies the first query feature and the first key feature to obtain the first attention matrix.

The execution device may generate, based on the feature information of the first information by using a first module, a second parameter corresponding to the neural network layer used to perform the third linear transformation operation. It should be noted that the first module in FIG. 7 and the first module in FIG. 7 may be different first modules. The execution device determines, based on a first parameter and the second parameter that correspond to the neural network layer used to perform the third linear transformation operation, a parameter used by the neural network layer used to perform the third linear transformation operation, and then performs the third linear transformation operation on the first feature information, to obtain the first value (value) feature. It should be understood that the example in FIG. 7 is merely for ease of understanding of this solution, and is not intended to limit this solution.

A specific implementation in which the execution device "generates, based on the second feature information corresponding to the second task, the second attention matrix corresponding to the second task" is similar to a specific implementation of "generating, based on the first feature information corresponding to the first task, the first attention matrix corresponding to the first task". A difference lies in that "the first task" is replaced with "the second task", "the first feature information" is replaced with "the second feature information", and "the first attention matrix" is replaced with "the second attention matrix". For details, refer to the foregoing descriptions. Details are not described herein again.

For example, a manner used for "fusion" may be addition, weighted summation, multiplication, another fusion manner, or the like. Specifically, the manner may be determined with reference to an actual application scenario. This is not exhaustive herein. For example, the execution device may multiply the first fusion result by the first value feature, to obtain the updated first feature information.

In this embodiment of this application, the first attention matrix and the first value feature are obtained based on the first feature information, the second attention matrix is obtained based on the second feature information, and the first attention matrix and the second attention matrix are fused. After a fusion result is obtained, the updated first feature information is generated based on the fusion result and the first value feature (that is, the second feature information is fused into the first feature information). In the foregoing manner, an implementation solution in which the second feature information is fused into the first feature information based on the attention mechanism is provided, which is simple and easy to operate. In addition, the foregoing fusion manner adapts to a process of updating the first feature information based on the attention mechanism, thereby further reducing implementation difficulty.

In another case, the execution device may generate, based on the first feature information corresponding to the first task, the first query feature, the first key feature, and the first value feature, and generate, based on the first query feature and the first key feature, the first attention matrix corresponding to the first task. The execution device obtains a second value feature corresponding to the second task. The second value feature is obtained based on the second feature information corresponding to the second task. The execution device fuses the first value feature and the second value feature, to obtain a second fusion result; and generates the updated first feature information based on the first attention matrix and the second fusion result. For example, the execution device may multiply the first attention matrix by the second fusion result, to obtain the updated first feature information.

In another implementation, the execution device may determine a first weight of the first feature information, determine a second weight of each of the (M-1) pieces of second feature information, and perform weighted summation on the first feature information and the (M-1) pieces of second feature information, to obtain the updated first feature information. A sum of (M-1) second weights corresponding to the (M-1) pieces of second feature information is less than the first weight.

It should be noted that the execution device may further fuse the first feature information of the first data and the (M-1) pieces of second feature information of the first data in another manner. This is not limited in this embodiment of this application.

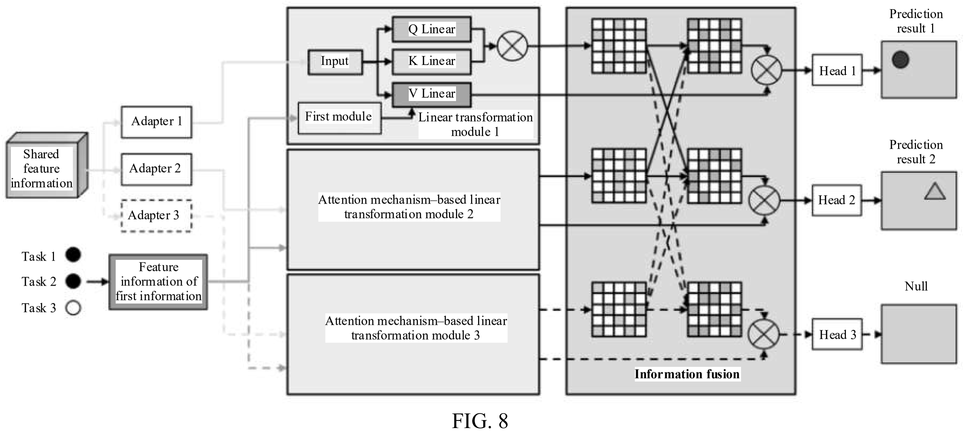

For more intuitive understanding of this solution, refer to FIG. 8. FIG. 8 is a diagram of performing an operation in the second feature extraction stage by using the first machine learning model according to an embodiment of this application. As shown in FIG. 8, the first information indicates that the task 1 and the task 2 need to be executed on the first data that is input into the first machine learning model, and the task 3 does not need to be executed on the first data. In FIG. 8, a path shown by a solid line indicates transmission of valid data, while a path shown by a dashed line may be null data. In this case, after the shared feature information of the first data is obtained in the first feature extraction stage, in a process of performing an operation in the second feature extraction stage by using the feature extraction network of the first machine learning model, the execution device may input the shared feature information of the first data into an adapter 1 corresponding to the task 1, to obtain first feature information corresponding to the task 1 (that is, an input generated by the adapter 1 in FIG. 8). Q Linear in FIG. 8 is used to perform the first linear transformation operation on the first feature information corresponding to the task 1, to obtain a query feature 1 corresponding to the task 1. K Linear in FIG. 8 is used to perform the second linear transformation operation on the first feature information corresponding to the task 1, to obtain a key feature 1 corresponding to the task 1. V Linear in FIG. 8 is used to perform the third linear transformation operation on the first feature information corresponding to the task 1, to obtain a value feature 1 corresponding to the task 1. A neural network layer used to perform the third linear transformation operation on the first feature information corresponding to the task 1 is the first neural network layer. That is, a parameter used by the neural network layer used to perform the third linear transformation operation on the first feature information corresponding to the task 1 is obtained based on the first information.

The execution device generates, by using a linear transformation module 1, an attention matrix 1 corresponding to the task 1 and a value feature corresponding to the task 1. For specific implementations of all steps performed by the execution device by using the linear transformation module 1, refer to the foregoing descriptions of FIG. 7. Details are not described herein again.

Similarly, the execution device generates, by using an attention mechanism-based linear transformation module 1, an attention matrix 2 corresponding to the task 2 and a value feature 2 corresponding to the task 2. Specific implementations of all steps performed by the execution device by using the attention mechanism-based linear transformation module 2 are similar to the specific implementations of all steps performed by using the linear transformation module 1. Details are not described herein again.

After obtaining the attention matrix 1, the value feature 1, the attention matrix 2, and the value feature 2, the execution device fuses the attention matrix 1 and the attention matrix 2 to obtain a fusion result 1, and multiplies the fusion result 1 by the value feature 1 to obtain third feature information (namely, updated first feature information) corresponding to the task 1. The execution device inputs the third feature information corresponding to the task 1 into a task head 1 (Head 1), to obtain a prediction result 1 that is output by the head 1 and that corresponds to the task 1. The head 1 is a feature processing network that is of three feature processing networks included in the first machine learning model and that corresponds to the task 1.

Correspondingly, the execution device fuses the attention matrix 2 and the attention matrix 2 to obtain a fusion result 2, and multiplies the fusion result 2 by the value feature 2 to obtain third feature information (namely, updated first feature information) corresponding to the task 2. The execution device inputs the third feature information corresponding to the task 2 into a task head 2 (Head 2), to obtain a prediction result 2 that is output by the head 2 and that corresponds to the task 2. The head 2 is a feature processing network that is of three feature processing networks included in the first machine learning model and that corresponds to the task 2. It should be understood that the example in FIG. 8 is merely for ease of understanding of this solution, and is not intended to limit this solution.

In this embodiment of this application, second feature information corresponding to another task (namely, the second task) is fused into the first feature information corresponding to the first task, to obtain updated first feature information. This helps a feature processing network corresponding to the first task obtain richer information, and further helps improve accuracy of a prediction result output by the first machine learning model.

403. Perform feature processing on each piece of third feature information of the first data by using the first machine learning model, to obtain at least one prediction result that is output by the first machine learning model and that is in a one-to-one correspondence with the at least one task.

In this embodiment of this application, the first machine learning model may include N feature processing networks that are in a one-to-one correspondence with the N tasks. After the execution device obtains the M pieces of third feature information of the first data by using the feature extraction network of the first machine learning model, for example, a process in which the execution device processes third feature information corresponding to one task (which is subsequently referred to as a "target task" for ease of description) in the M tasks may include: The execution device performs, by using one feature processing network that is in the N feature processing networks and that corresponds to the target task, feature processing on one piece of third feature information corresponding to the target task, to obtain a prediction result output by the feature processing network corresponding to the target task.

The execution device may separately perform the foregoing operation by using M feature processing networks that are in the N feature processing networks and that are in a one-to-one correspondence with the M tasks, to obtain M prediction results output by the M feature processing networks, that is, obtain the M prediction results that are in a one-to-one correspondence with the M tasks.

Each of the N feature extraction networks may include one or more neural network layers. Optionally, at least one (which is subsequently referred to as a "first feature extraction network" for ease of description) of the N feature extraction networks may include one or more first neural network layers. A parameter of the first neural network layer is determined based on the first information. That is, in a process of performing feature processing by using the first feature extraction network, a parameter used by each first neural network layer in the first feature extraction network is determined based on the first information. For a process of "determining, based on the first information, the parameter used by the first neural network layer", refer to the descriptions in step 402. Details are not described in this embodiment of this application.

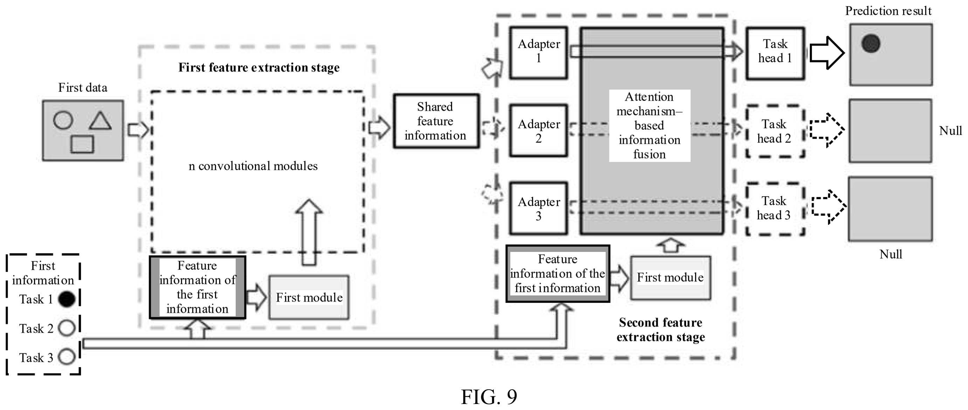

For more intuitive understanding of this solution, refer to FIG. 9. FIG. 9 is a diagram of the first machine learning model according to an embodiment of this application. As shown in FIG. 9, when the feature extraction network of the first machine learning model performs feature extraction on the input first data, a first feature extraction stage and a second feature extraction stage may be included. The first feature extraction stage may include n convolutional modules. Feature information of the first data generated in the first feature extraction stage is the feature information shared by the M tasks. For a specific implementation of "the first feature extraction stage", refer to the foregoing descriptions in FIG. 6. Details are not described herein.

In the second feature extraction stage, N adapters (namely, the adapter 1, an adapter 2, and an adapter 3 in FIG. 6) that are in a one-to-one correspondence with the N tasks may be included. Each adapter is configured to generate, based on the shared feature information, the first feature information corresponding to each of the M tasks, and then generate, by using an attention mechanism-based information fusion module, updated first feature information (namely, third feature information) corresponding to each of the M tasks. For a specific implementation of "the second feature extraction stage", refer to FIG. 8. Details are not described herein.

Because the first information indicates to execute the task 1 on the input first data, after the third feature information corresponding to the task 1 is obtained, feature processing is performed on the third feature information corresponding to the task 1 by using the task head 1 corresponding to the task 1, to obtain a prediction result output by the task head 1. As shown in FIG. 9, at least one first neural network layer included in the first machine learning model is in both the first feature extraction stage and the second feature extraction stage. It should be understood that the example in FIG. 6 is merely for ease of understanding of this solution, and is not intended to limit this solution.

In this embodiment of this application, the first information is added to an input of the first machine learning model, the first information indicates that at least one task needs to be executed on the first data, and the first machine learning model outputs at least one prediction result that is in a one-to-one correspondence with the at least one task. To be precise, the first machine learning model can learn of, based on the first information, specific tasks that need to be executed on the first data, so that a required task can be adaptively executed on the first data, thereby avoiding generating a redundant prediction result and avoiding a waste of computer resources.

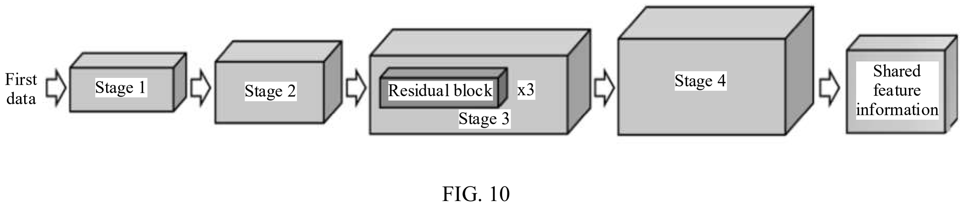

In this embodiment of this application, for more intuitive understanding of this solution, with reference to FIG. 10 to FIG. 12, the following describes a network structure of a neural network in which the execution device performs the first feature extraction stage by using the first machine learning model after obtaining the first data and the first information. In FIG. 10 to FIG. 12, an example in which the first machine learning model uses a residual network (residual network, ResNet) during execution of the first feature extraction stage is used. FIG. 10 is a diagram of the residual network according to an embodiment of this application. FIG. 10 shows that the ResNet of the first machine learning model includes four stages (stages). Feature information in a same stage has a same resolution, and feature information in different stages has different resolutions. In FIG. 10, an example is used in which a stage 1, a stage 2, and a stage 4 each include one residual block (residual block) and a stage 3 includes three residual blocks. After the first data input to the first machine learning model passes through the stage 1 to the stage 4 in the first machine learning model, the shared feature information of the first data is obtained.

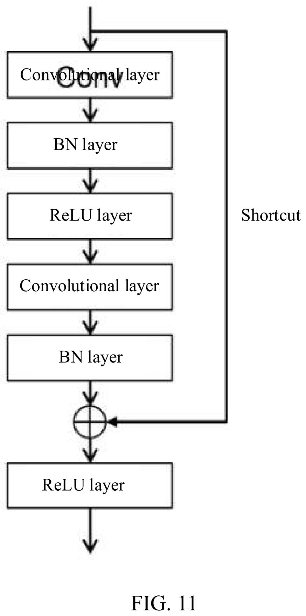

Still refer to FIG. 11. FIG. 11 is a diagram of a structure of each residual block according to an embodiment of this application. Each residual block includes a structure of two sets of layers including convolutional layers, batch normalization (batch normalization, BN) layers, and rectified linear unit (rectified linear unit, ReLU) layers, and further includes a shortcut (shortcut) connecting an input of the residual block to a position preceding a last ReLU layer. The shortcut refers to a skip connection that spans across a plurality of neural network layers in the residual block. Both the convolutional layer and the BN layer in each residual block are the first neural network layer. That is, parameters used by the convolutional layer and the BN layer in each residual block are related to the first information.

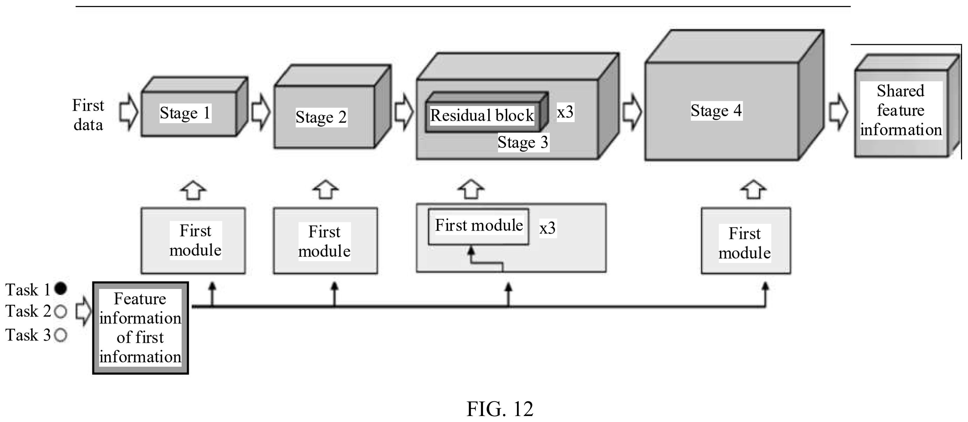

FIG. 12 is a diagram of a neural network used when the first feature extraction stage is executed by using the feature extraction network of the first machine learning model according to an embodiment of this application. As shown in FIG. 12, based on the residual network, additional first information is added as an input to the first machine learning model. The first information in FIG. 12 indicates that a task 1 in three tasks needs to be executed on the first data. A corresponding first module is configured for each stage. One first module is configured for each of the stage 1, the stage 2, and the stage 4. Because there are three residual blocks in the stage 3, three first modules are configured for the stage 3. A plurality of first modules in FIG. 12 are different first modules. The first module is configured to generate, based on the feature information of the first information, a second parameter corresponding to each first neural network layer. For a specific working process of the first module, refer to the foregoing descriptions. Details are not described herein again. It should be understood that the example in FIG. 12 is merely for ease of understanding of this solution, and is not intended to limit this solution.

### 2. Training stage

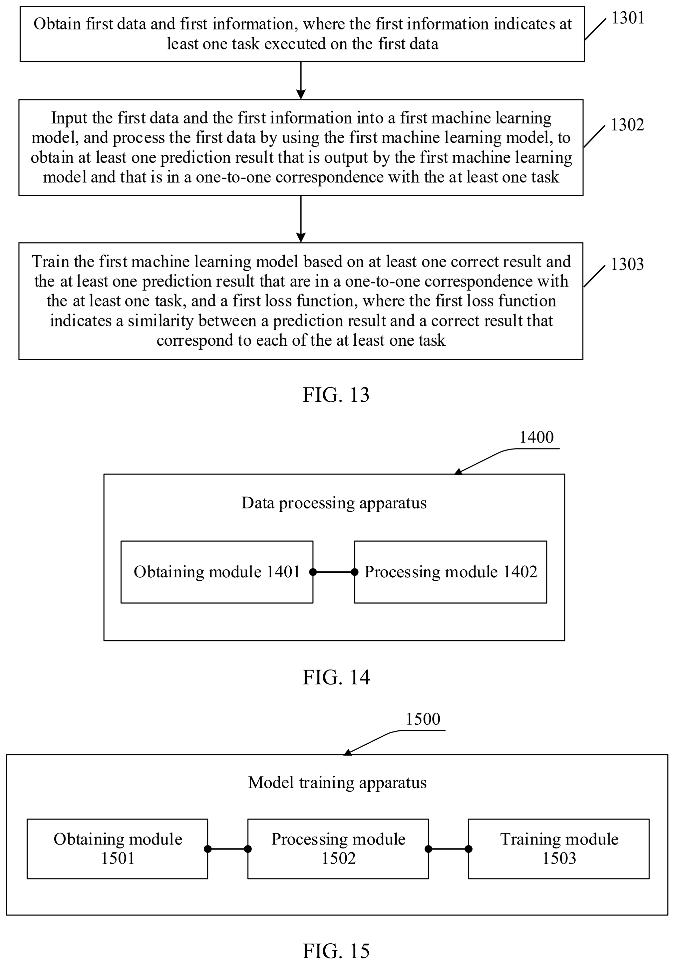

In this embodiment of this application, the training stage describes a process in which the training device 210 performs a training operation on the first machine learning model 201 by using a training data set. Specifically, refer to FIG. 13. FIG. 13 is a schematic flowchart of a model training method according to an embodiment of this application. The model training method provided in this embodiment of this application may include the following steps.

1301: Obtain first data and first information, where the first information indicates at least one task executed on the first data.

1302: Input the first data and the first information into a first machine learning model, and process the first data by using the first machine learning model, to obtain at least one prediction result that is output by the first machine learning model and that is in a one-to-one correspondence with the at least one task.

In this embodiment of this application, the first machine learning model has a capability of simultaneously executing N tasks on the input first data. The first information indicates M tasks executed on the first data, N is an integer greater than or equal to 2, and M is an integer greater than or equal to 1. For a specific implementation in which the training device performs steps 1301 and 1302 and meanings of nouns in steps 1301 and 1302, refer to the descriptions in steps 401 to 403 in the embodiment corresponding to FIG. 4. Details are not described herein again.

1303: Train the first machine learning model based on at least one correct result and the at least one prediction result that are in a one-to-one correspondence with the at least one task, and a first loss function, where the first loss function indicates a similarity between a prediction result and a correct result that correspond to each of the at least one task.

In this embodiment of this application, in an implementation, all parameters used in the first machine learning model are trained together. In this case, during each training process, after obtaining M prediction results that are output by the first machine learning model and that are in a one-to-one correspondence with the M tasks, the training device may generate a function value of the first loss function based on the M prediction results and M correct results that are in a one-to-one correspondence with the M tasks; and perform gradient derivation on the first loss function, and update a parameter value in the first machine learning model by using a back propagation algorithm, to complete training on the first machine learning model once.

The first loss function indicates a similarity between the prediction result and the correct result that correspond to each of the M tasks, and an objective of training by using the first loss function includes improving the similarity between the prediction result and the correct result that correspond to each of the M tasks.

The training device may repeatedly perform steps 1302 and 1303, to implement iterative training on the first machine learning model until a convergence condition is met, to obtain the first machine learning model on which the training operation has been performed. For example, the convergence condition may be that a convergence condition of the first loss function is met, or may be that a quantity of times of training the first machine learning model reaches a preset quantity of times, or the like. This is not exhaustive herein.

In another implementation, if the first machine learning model includes a first module, the first module is configured to generate a second parameter of each first neural network layer. Optionally, a training process of the first machine learning model may be divided into a first training stage and a second training stage. In the first training stage, the training device may update only a parameter of a neural network layer other than the first module in the first machine learning model.

For example, during each training in the first training stage, the first information indicates to execute all of the N tasks on the first data, and the at least one prediction result that is in a one-to-one correspondence with the at least one task includes N prediction results that are in a one-to-one correspondence with the N tasks. The training device may generate a function value of the first loss function based on the N prediction results and N correct results that are in a one-to-one correspondence with the N tasks; and perform gradient derivation on the first loss function, and update a parameter of the neural network layer other than the first module in the first machine learning model by using the back propagation algorithm, to complete training on the first machine learning model once. The first loss function indicates a similarity between a prediction result and a correct result that correspond to each of the N tasks.

The training device may repeatedly perform steps 1302 and 1303, to implement iterative training on the first machine learning model until a first convergence condition is met. The first convergence condition may be that a convergence condition of the first loss function is met, or may be that a quantity of times of updating the parameter of the neural network layer other than the first module in the first machine learning model reaches a first preset quantity of times, or the like. This is not exhaustive herein.

During each training in the second training stage, the first information indicates to execute M tasks in the N tasks on the first data, and the at least one prediction result that is in a one-to-one correspondence with the at least one task includes M prediction results that are in a one-to-one correspondence with the M tasks. For a specific implementation in which the training device trains the first module in the first machine learning model based on the M prediction results and M correct results that are in a one-to-one correspondence with the M tasks, and the first loss function, refer to the descriptions in the foregoing implementation. A difference lies in that in the foregoing implementation, the training device updates all parameters in the first machine learning model based on the function value of the first loss function, while in this implementation, because the parameter of the neural network layer other than the first module in the first machine learning model has been obtained in the first training stage, only a parameter of each first module in the first machine learning model is updated in the second training stage until a second convergence condition is met.

For example, the first convergence condition may be that a convergence condition of the first loss function is met, or may be that a quantity of times of updating a parameter of the first module in the first machine learning model reaches a second preset quantity of times, or the like. This is not exhaustive herein.

After completing operations in the first training stage and the second training stage, the training device can obtain the first machine learning model on which the training operation has been executed.

To further understand beneficial effects brought by embodiments of this application, the following provides descriptions with reference to experimental data. Refer to the following Table 1. An example in which an experiment is performed on an NYUDv2 dataset and the N tasks include three tasks: performing semantic segmentation on an image, performing depth estimation on the image, and performing normal estimation on the image is used in Table 1.

**Table 1**

| | Large | Middle | Small |
|---|---|---|---|
| SingleTask | 0 | 0 | 0 |
| BaseMultiTask | -1.795 | -1.405 | -0.520 |
| Method provided in this application | 2.583 | 5.571 | 6.633 |

SingleTask indicates that the N tasks are separately processed by using an independent machine learning model. BaseMultiTask indicates that the N tasks share a feature extraction network. The foregoing shared feature extraction network is connected to N feature processing networks, to separately output prediction results of the N tasks. A number in Table 1 represents comprehensive performance across a plurality of tasks. Comprehensive performance of the prediction results of the N tasks obtained by using SingleTask is 0. That is, comprehensive performance of the prediction results of the N tasks obtained by using SingleTask is used as a baseline. A trained machine learning model obtained by using BaseMultiTask reduces comprehensive performance of the prediction results of the N tasks. A trained machine learning model obtained by using the method provided in this application improves comprehensive performance of the prediction results of the N tasks.

Based on embodiments corresponding to FIG. 1 to FIG. 13, to better implement the foregoing solutions in embodiments of this application, the following further provides related devices configured to implement the foregoing solutions. Specifically, refer to FIG. 14. FIG. 14 is a diagram of a structure of a data processing apparatus according to an embodiment of this application. The data processing apparatus 1400 includes: an obtaining module 1401, configured to obtain first data and first information, where the first information indicates at least one task executed on the first data; and a processing module 1402, configured to: input the first data and the first information into a first machine learning model, and process the first data by using the first machine learning model, to obtain at least one prediction result that is output by the first machine learning model and that is in a one-to-one correspondence with the at least one task.

Optionally, the first machine learning model includes a plurality of neural network layers, and the plurality of neural network layers include at least one first neural network layer. The processing module 1402 is specifically configured to: determine, based on the first information, a parameter used by the first neural network layer; and process second data by using the first neural network layer and based on the parameter used by the first neural network layer, to obtain a processing result that is of the second data and that is generated by the first neural network layer. The second data is the first data or feature information of the first data.

Optionally, if the second data is the feature information of the first data, the processing result of the second data is updated feature information of the first data; or if the second data is the first data, the processing result of the second data is the feature information of the first data.

Optionally, the processing module 1402 is specifically configured to: obtain a first parameter corresponding to the first neural network layer; determine, based on feature information of the first information, a second parameter corresponding to the first neural network layer; and determine, based on the first parameter and the second parameter, the parameter used by the first neural network layer.

Optionally, the processing module 1402 is specifically configured to fuse first feature information of the first data and second feature information of the first data, to obtain updated first feature information. The updated first feature information is used to obtain a first prediction result, and the first prediction result is one of the at least one prediction result that corresponds to a first task. The first feature information corresponds to the first task, the second feature information corresponds to a second task, the first task is any one of the at least one task, and the second task is a task other than the first task in the at least one task.

Optionally, the processing module 1402 is specifically configured to fuse the first feature information and the second feature information based on an attention mechanism, to obtain the updated first feature information.

Optionally, the processing module 1402 is specifically configured to: generate, based on the first feature information corresponding to the first task, a first query (query) feature, a first key (key) feature, and a first value (value) feature, and generate, based on the first query feature and the first key feature, a first attention matrix corresponding to the first task; obtain a second attention matrix corresponding to the second task, where the second attention matrix is obtained based on the second feature information corresponding to the second task; fuse the first attention matrix and the second attention matrix, to obtain a fusion result; and generate the updated first feature information based on the fusion result and the first value feature.

Optionally, the first data is an image, and the at least one task includes any one or more of the following: image classification, object detection on the image, semantic segmentation on the image, segmentation of an attention object from the image, text recognition on the image, image instance segmentation, posture estimation on a human body in the image, or action recognition on a human body in the image.

It should be noted that content such as information exchange and an execution process between the modules/units in the data processing apparatus 1400 is based on a same concept as the method embodiments corresponding to FIG. 3 to FIG. 12 in this application. For specific content, refer to the descriptions in the foregoing method embodiments of this application. Details are not described herein again.

Still refer to FIG. 15. FIG. 15 is a diagram of a structure of a model training apparatus according to an embodiment of this application. The model training apparatus 1500 includes: an obtaining module 1501, configured to obtain first data and first information, where the first information indicates at least one task executed on the first data; a processing module 1502, configured to: input the first data and the first information into a first machine learning model, and process the first data by using the first machine learning model, to obtain at least one prediction result that is output by the first machine learning model and that is in a one-to-one correspondence with the at least one task; and a training module 1503, configured to train the first machine learning model based on at least one correct result and the at least one prediction result that are in a one-to-one correspondence with the at least one task, and a loss function. The loss function indicates a similarity between a prediction result and a correct result that correspond to each of the at least one task.

Optionally, the first machine learning model includes a plurality of neural network layers, and the plurality of neural network layers include at least one first neural network layer. The processing module 1502 is specifically configured to: determine, based on feature information of the first information, a parameter used by the first neural network layer; and process second data by using the first neural network layer and based on the parameter used by the first neural network layer, to obtain a processing result that is of the second data and that is generated by the first neural network layer. The second data is the first data or feature information of the first data.

Optionally, the processing module 1502 is specifically configured to fuse first feature information of the first data and second feature information of the first data, to obtain updated first feature information. The updated first feature information is used to obtain a first prediction result, and the first prediction result is one of the at least one prediction result that corresponds to a first task. The first feature information corresponds to the first task, the second feature information corresponds to a second task, the first task is any one of the at least one task, and the second task is a task other than the first task in the at least one task.

It should be noted that content such as information exchange and an execution process between the modules/units in the model training apparatus 1500 is based on a same concept as the method embodiments corresponding to FIG. 13 in this application. For specific content, refer to the descriptions in the foregoing method embodiments of this application. Details are not described herein again.

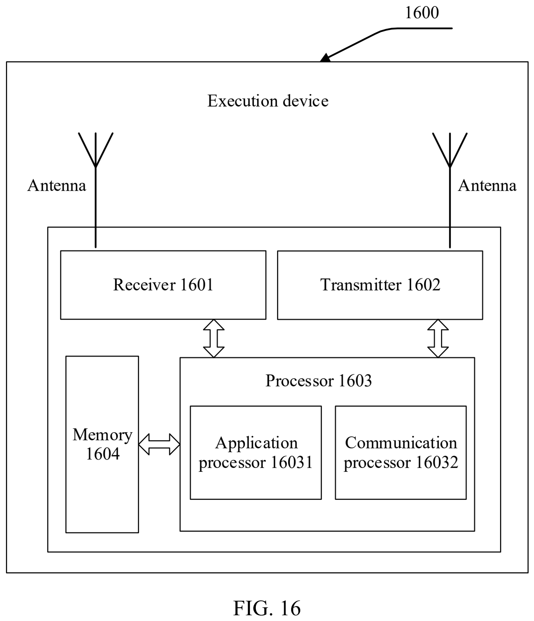

The following describes an execution device provided in an embodiment of this application. FIG. 16 is a diagram of a structure of an execution device according to an embodiment of this application. Specifically, the execution device 1600 includes: a receiver 1601, a transmitter 1602, a processor 1603, and a memory 1604 (there may be one or more processors 1603 in the execution device 1600, and one processor is used as an example in FIG. 16). The processor 1603 may include an application processor 16031 and a communication processor 16032. In some embodiments of this application, the receiver 1601, the transmitter 1602, the processor 1603, and the memory 1604 may be connected through a bus or in another manner.

The memory 1604 may include a read-only memory and a random access memory, and provide instructions and data to the processor 1603. A part of the memory 1604 may further include a non-volatile random access memory (non-volatile random access memory, NVRAM). The memory 1604 stores a processor and operation instructions, executable modules or data structures, or a subset thereof, or an extended set thereof. The operation instructions may include various operation instructions for implementing various operations.

The processor 1603 controls an operation of the execution device. During specific application, the components of the execution device are coupled together through a bus system. In addition to a data bus, the bus system may further include a power bus, a control bus, a status signal bus, and the like. However, for clear description, various types of buses in the figure are referred to as the bus system.

The methods disclosed in embodiments of this application may be applied to the processor 1603 or may be implemented by the processor 1603. The processor 1603 may be an integrated circuit chip and has a signal processing capability. In an implementation process, steps in the foregoing method may be implemented by using a hardware integrated logic circuit in the processor 1603, or by using instructions in a form of software. The processor 1603 may be a general-purpose processor, a digital signal processor (digital signal processor, DSP), a microprocessor, or a microcontroller. The processor 1603 may further include an application-specific integrated circuit (application-specific integrated circuit, ASIC), a field programmable gate array (field programmable gate array, FPGA) or another programmable logic device, a discrete gate or transistor logic device, or a discrete hardware component. The processor 1603 may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 1604, and the processor 1603 reads information in the memory 1604 and completes the steps in the foregoing methods in combination with hardware of the processor.

The receiver 1601 may be configured to: receive input digital or character information, and generate a signal input related to function control and related setting of the execution device. The transmitter 1602 may be configured to output digital or character information through a first interface. The transmitter 1602 may be further configured to send instructions to a disk group through the first interface, to modify data in the disk group. The transmitter 1602 may further include a display device, for example, a display.

In this embodiment of this application, the processor 1603 is configured to perform the data processing method performed by the execution device in embodiments corresponding to FIG. 3 to FIG. 12. A specific manner of performing the foregoing steps by the application processor 16031 in the processor 1603 is based on a same concept as the method embodiments corresponding to FIG. 3 to FIG. 12 in this application. Technical effects brought by the specific manner are the same as those of the method embodiments corresponding to FIG. 3 to FIG. 12 in this application. For specific content, refer to the descriptions in the method embodiments of this application. Details are not described herein again.

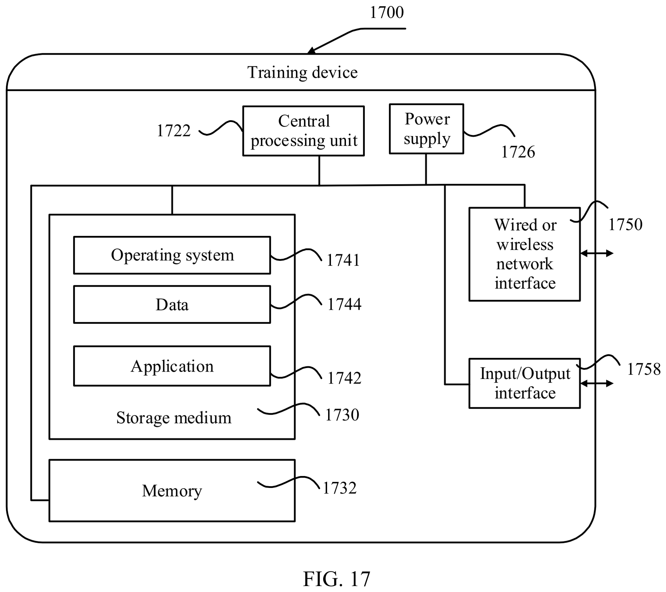

An embodiment of this application further provides a training device. FIG. 17 is a diagram of a structure of a training device according to an embodiment of this application. Specifically, the training device 1700 is implemented by using one or more servers. The training device 1700 may differ greatly due to different configurations or performance, and may include one or more central processing units (central processing units, CPU) 1722 (for example, one or more processors), a memory 1732, and one or more storage media 1730 (for example, one or more mass storage devices) for storing an application 1742 or data 1744. The memory 1732 and the storage medium 1730 may be transitory storage or persistent storage. A program stored in the storage medium 1730 may include one or more modules (not shown in the figure), and each module may include a series of instruction operations for the training device. Further, the central processing unit 1722 may be configured to: communicate with the storage medium 1730, and perform the series of instruction operations in the storage medium 1730 on the training device 1700.

The training device 1700 may further include one or more power supplies 1726, one or more wired or wireless network interfaces 1750, one or more input/output interfaces 1758, and/or one or more operating systems 1741 such as Windows ServerTM, Mac OS XTM, UnixTM, LinuxTM, and FreeBSDTM.

In this embodiment of this application, the central processing unit 1722 is configured to perform the data processing method performed by the training device in the embodiment corresponding to FIG. 13. A specific manner of performing the foregoing steps by the central processing unit 1722 is based on a same concept as the method embodiment corresponding to FIG. 13 in this application. Technical effects brought by the specific manner are the same as those of the method embodiment corresponding to FIG. 13 in this application. For specific content, refer to the descriptions in the method embodiments of this application. Details are not described herein again.

An embodiment of this application further provides a computer-readable storage medium. The computer-readable storage medium stores a program for signal processing. When the program is run on a computer, the computer is enabled to perform the steps performed by the execution device in the methods described in embodiments shown in FIG. 3 to FIG. 12, or the computer is enabled to perform the steps performed by the training device in the method described in the embodiment shown in FIG. 13.

An embodiment of this application further provides a computer program product. When the computer program product is run on a computer, the computer is enabled to perform the steps performed by the execution device in the methods described in embodiments shown in FIG. 3 to FIG. 12, or the computer is enabled to perform the steps performed by the training device in the method described in the embodiment shown in FIG. 13.

The execution device or the training device provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, to enable the chip to perform the data processing method described in embodiments shown in FIG. 3 to FIG. 12, or enable the chip to perform the model training method described in the embodiment shown in FIG. 13. Optionally, the storage unit is a storage unit in the chip, for example, a register or a cache. Alternatively, the storage unit may be a storage unit in a wireless access device end but outside the chip, for example, a read-only memory (read-only memory, ROM), another type of static storage device that can store static information and instructions, or a random access memory (random access memory, RAM).

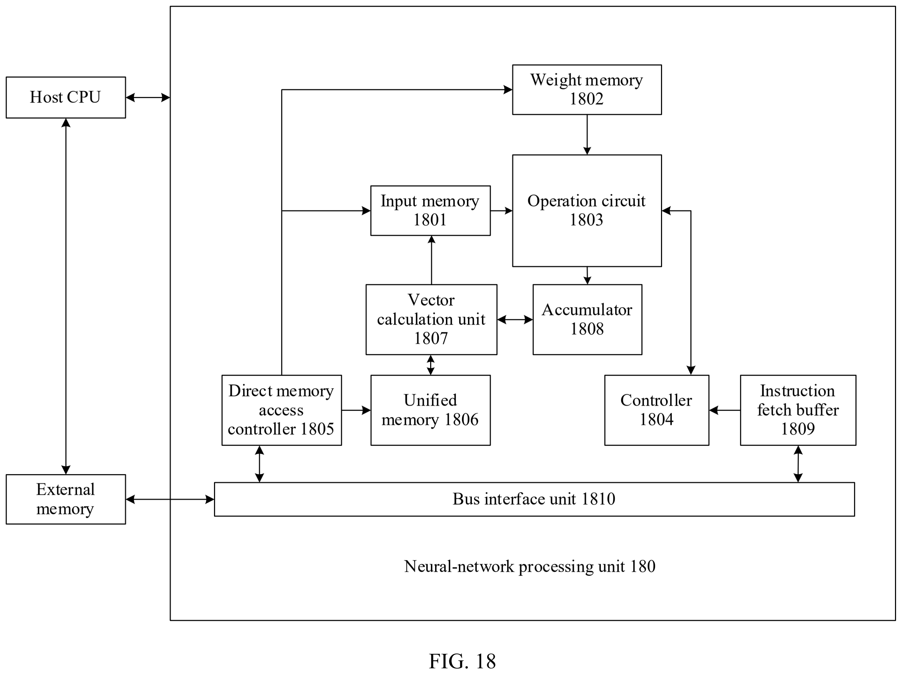

Specifically, refer to FIG. 18. FIG. 18 is a diagram of a structure of the chip according to an embodiment of this application. The chip may be represented as a neural-network processing unit NPU 180. The NPU 180 is mounted to a host CPU (Host CPU) as a coprocessor, and the host CPU allocates a task. A core part of the NPU is an operation circuit 1803. A controller 1804 controls the operation circuit 1803 to extract matrix data in a memory and performs a multiplication operation. In some implementations, the operation circuit 1803 internally includes a plurality of processing units (Process Engine, PE). In some implementations, the operation circuit 1803 is a two-dimensional systolic array. The operation circuit 1803 may alternatively be a one-dimensional systolic array or another electronic circuit that can perform mathematical operations such as multiplication and addition. In some implementations, the operation circuit 1803 is a general-purpose matrix processor.

For example, it is assumed that there are an input matrix A, a weight matrix B, and an output matrix C. The operation circuit fetches, from a weight memory 1802, data corresponding to the matrix B, and caches the data on each PE in the operation circuit. The operation circuit fetches data of the matrix A from an input memory 1801, to perform a matrix operation on the matrix B, and stores an obtained partial result or an obtained final result of the matrix in an accumulator (accumulator) 1808.

A unified memory 1806 is configured to store input data and output data. Weight data is directly transferred to the weight memory 1802 through a direct memory access controller DMAC (Direct Memory Access Controller, DMAC) 1805. The input data is also transferred to the unified memory 1806 by using the DMAC.

A BIU is a bus interface unit, namely, a bus interface unit 1810, and is configured to perform interaction between an AXI bus and the DMAC and between the AXI bus and an instruction fetch buffer (Instruction Fetch Buffer, IFB) 1809.

The bus interface unit (Bus Interface Unit, BIU for short) 1810 is used by the instruction fetch buffer 1809 to obtain instructions from an external memory, and is further used by the direct memory access controller 1805 to obtain original data of the input matrix A or the weight matrix B from the external memory.

The DMAC is mainly configured to transfer input data in the external memory DDR to the unified memory 1806, transfer weight data to the weight memory 1802, or transfer input data to the input memory 1801.

A vector calculation unit 1807 includes a plurality of operation processing units, and performs further processing, for example, vector multiplication, vector addition, an exponential operation, a logarithmic operation, or value comparison, on an output of the operation circuit if necessary. The vector calculation unit 1807 is mainly configured to perform network computation at a non-convolutional/fully connected layer of a neural network, for example, batch normalization (batch normalization), pixel-level summation, and upsampling on a feature plane.

In some implementations, the vector calculation unit 1807 can store a processed output vector in the unified memory 1806. For example, the vector calculation unit 1807 may apply a linear function and/or a non-linear function to the output of the operation circuit 1803. For example, linear interpolation is performed on a feature plane extracted at a convolutional layer. For another example, vectors whose values are accumulated are used to generate an activation value. In some implementations, the vector calculation unit 1807 generates a normalized value, a pixel-level summation value, or both a normalized value and a pixel-level summation value. In some implementations, the processed output vector can be used as an activation input to the operation circuit 1803, for example, used at a subsequent layer in the neural network.

The instruction fetch buffer (instruction fetch buffer) 1809 connected to the controller 1804 is configured to store instructions used by the controller 1804.

The unified memory 1806, the input memory 1801, the weight memory 1802, and the instruction fetch buffer 1809 are all on-chip memories. The external memory is private to a hardware architecture of the NPU.

Operations at various layers in high-dimensional convolutional neural networks shown in FIG. 7 and FIG. 7 may be performed by the operation circuit 1803 or the vector calculation unit 1807.

The processor mentioned anywhere above may be a general-purpose central processing unit, a microprocessor, an ASIC, or one or more integrated circuits that are configured to control program execution of the method according to the first aspect.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including an application-specific integrated circuit, a dedicated CPU, a dedicated memory, a dedicated component, and the like. Usually, any function implemented by a computer program can be easily implemented by using corresponding hardware. In addition, specific hardware structures used to implement a same function may be various, for example, an analog circuit, a digital circuit, or a dedicated circuit. However, as for this application, software program implementation is a better implementation in most cases. Based on such an understanding, the technical solutions of this application essentially or the part contributing to the prior art may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application. All or some of the foregoing embodiments may be implemented by using software, hardware, firmware, or any combination thereof. When software is used to implement embodiments, the foregoing embodiments may be implemented completely or partially in a form of a computer program product.

The computer program product includes one or more computer instructions. When the computer program instructions are loaded and executed on the computer, the procedures or functions according to embodiments of this application are completely or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, for example, a training device or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (Solid-State Drive, SSD)), or the like.

## Claims

1. A data processing method, comprising:
obtaining first data and first information, wherein the first information indicates at least one task executed on the first data; and
inputting the first data and the first information into a first machine learning model, and processing the first data by using the first machine learning model, to obtain at least one prediction result that is output by the first machine learning model and that is in a one-to-one correspondence with the at least one task.

2. The method according to claim 1, wherein the first machine learning model comprises a plurality of neural network layers, the plurality of neural network layers comprise at least one first neural network layer, and processing the first data by using the first machine learning model comprises:
determining, based on the first information, a parameter used by the first neural network layer; and
processing second data by using the first neural network layer and based on the parameter used by the first neural network layer, to obtain a processing result that is of the second data and that is generated by the first neural network layer, wherein the second data is the first data or feature information of the first data.

3. The method according to claim 2, wherein if the second data is the feature information of the first data, the processing result of the second data is updated feature information of the first data; or if the second data is the first data, the processing result of the second data is the feature information of the first data.

4. The method according to claim 2, wherein determining, based on the first information, the parameter used by the first neural network layer comprises:
obtaining a first parameter corresponding to the first neural network layer;
determining, based on feature information of the first information, a second parameter corresponding to the first neural network layer; and
determining, based on the first parameter and the second parameter, the parameter used by the first neural network layer.

5. The method according to any one of claims 1 to 4, wherein processing the first data by using the first machine learning model comprises:
fusing first feature information of the first data and second feature information of the first data, to obtain updated first feature information, wherein the updated first feature information is used to obtain a first prediction result, and the first prediction result is one of the at least one prediction result that corresponds to a first task, wherein
the first feature information corresponds to the first task, the second feature information corresponds to a second task, the first task is any one of the at least one task, and the second task is a task other than the first task in the at least one task.

6. The method according to claim 5, wherein fusing the first feature information of the first data and the second feature information of the first data, to obtain the updated first feature information comprises:
fusing the first feature information and the second feature information based on an attention mechanism, to obtain the updated first feature information.

7. The method according to claim 6, wherein fusing the first feature information and the second feature information based on the attention mechanism, to obtain the updated first feature information comprises:
generating, based on the first feature information corresponding to the first task, a first query (query) feature, a first key (key) feature, and a first value (value) feature, and generating, based on the first query feature and the first key feature, a first attention matrix corresponding to the first task;
obtaining a second attention matrix corresponding to the second task, wherein the second attention matrix is obtained based on the second feature information corresponding to the second task;
fusing the first attention matrix and the second attention matrix, to obtain a fusion result; and
generating the updated first feature information based on the fusion result and the first value feature.

8. The method according to any one of claims 1 to 4, wherein the first data is an image, and the at least one task comprises any one or more of the following: image classification, object detection on the image, semantic segmentation on the image, segmentation of an attention object from the image, text recognition on the image, image instance segmentation, posture estimation on a human body in the image, or action recognition on a human body in the image.

9. A model training method, comprising:
obtaining first data and first information, wherein the first information indicates at least one task executed on the first data;
inputting the first data and the first information into a first machine learning model, and processing the first data by using the first machine learning model, to obtain at least one prediction result that is output by the first machine learning model and that is in a one-to-one correspondence with the at least one task; and
training the first machine learning model based on at least one correct result and the at least one prediction result that are in a one-to-one correspondence with the at least one task, and a loss function, wherein the loss function indicates a similarity between a prediction result and a correct result that correspond to each of the at least one task.

10. The method according to claim 9, wherein the first machine learning model comprises a plurality of neural network layers, the plurality of neural network layers comprise at least one first neural network layer, and processing the first data by using the first machine learning model comprises:
determining, based on feature information of the first information, a parameter used by the first neural network layer; and
processing second data by using the first neural network layer and based on the parameter used by the first neural network layer, to obtain a processing result that is of the second data and that is generated by the first neural network layer, wherein the second data is the first data or feature information of the first data.

11. The method according to claim 9 or 10, wherein processing the first data by using the first machine learning model comprises:
fusing first feature information of the first data and second feature information of the first data, to obtain updated first feature information, wherein the updated first feature information is used to obtain a first prediction result, and the first prediction result is one of the at least one prediction result that corresponds to a first task, wherein
the first feature information corresponds to the first task, the second feature information corresponds to a second task, the first task is any one of the at least one task, and the second task is a task other than the first task in the at least one task.

12. A data processing apparatus, comprising:
an obtaining module, configured to obtain first data and first information, wherein the first information indicates at least one task executed on the first data; and
a processing module, configured to: input the first data and the first information into a first machine learning model, and process the first data by using the first machine learning model, to obtain at least one prediction result that is output by the first machine learning model and that is in a one-to-one correspondence with the at least one task.

13. The apparatus according to claim 12, wherein the first machine learning model comprises a plurality of neural network layers, and the plurality of neural network layers comprise at least one first neural network layer, wherein
the processing module is specifically configured to:
determine, based on the first information, a parameter used by the first neural network layer; and
process second data by using the first neural network layer and based on the parameter used by the first neural network layer, to obtain a processing result that is of the second data and that is generated by the first neural network layer, wherein the second data is the first data or feature information of the first data.

14. The apparatus according to claim 13, wherein if the second data is the feature information of the first data, the processing result of the second data is updated feature information of the first data; or if the second data is the first data, the processing result of the second data is the feature information of the first data.

15. The apparatus according to claim 13, wherein the processing module is specifically configured to:
obtain a first parameter corresponding to the first neural network layer;
determine, based on feature information of the first information, a second parameter corresponding to the first neural network layer; and
determine, based on the first parameter and the second parameter, the parameter used by the first neural network layer.

16. The apparatus according to any one of claims 12 to 15, wherein
the processing module is specifically configured to fuse first feature information of the first data and second feature information of the first data, to obtain updated first feature information, wherein the updated first feature information is used to obtain a first prediction result, and the first prediction result is one of the at least one prediction result that corresponds to a first task, wherein
the first feature information corresponds to the first task, the second feature information corresponds to a second task, the first task is any one of the at least one task, and the second task is a task other than the first task in the at least one task.

17. The apparatus according to claim 16, wherein
the processing module is specifically configured to fuse the first feature information and the second feature information based on an attention mechanism, to obtain the updated first feature information.

18. The apparatus according to claim 17, wherein the processing module is specifically configured to:
generate, based on the first feature information corresponding to the first task, a first query (query) feature, a first key (key) feature, and a first value (value) feature, and generate, based on the first query feature and the first key feature, a first attention matrix corresponding to the first task;
obtain a second attention matrix corresponding to the second task, wherein the second attention matrix is obtained based on the second feature information corresponding to the second task;
fuse the first attention matrix and the second attention matrix, to obtain a fusion result; and
generate the updated first feature information based on the fusion result and the first value feature.

19. The apparatus according to any one of claims 12 to 15, wherein the first data is an image, and the at least one task comprises any one or more of the following: image classification, object detection on the image, semantic segmentation on the image, segmentation of an attention object from the image, text recognition on the image, image instance segmentation, posture estimation on a human body in the image, or action recognition on a human body in the image.

20. A model training apparatus, comprising:
an obtaining module, configured to obtain first data and first information, wherein the first information indicates at least one task executed on the first data;
a processing module, configured to: input the first data and the first information into a first machine learning model, and process the first data by using the first machine learning model, to obtain at least one prediction result that is output by the first machine learning model and that is in a one-to-one correspondence with the at least one task; and
a training module, configured to train the first machine learning model based on at least one correct result and the at least one prediction result that are in a one-to-one correspondence with the at least one task, and a loss function, wherein the loss function indicates a similarity between a prediction result and a correct result that correspond to each of the at least one task.

21. The apparatus according to claim 20, wherein the first machine learning model comprises a plurality of neural network layers, and the plurality of neural network layers comprise at least one first neural network layer, wherein
the processing module is specifically configured to:
determine, based on feature information of the first information, a parameter used by the first neural network layer; and
process second data by using the first neural network layer and based on the parameter used by the first neural network layer, to obtain a processing result that is of the second data and that is generated by the first neural network layer, wherein the second data is the first data or feature information of the first data.

22. The apparatus according to claim 20 or 21, wherein
the processing module is specifically configured to fuse first feature information of the first data and second feature information of the first data, to obtain updated first feature information, wherein the updated first feature information is used to obtain a first prediction result, and the first prediction result is one of the at least one prediction result that corresponds to a first task, wherein
the first feature information corresponds to the first task, the second feature information corresponds to a second task, the first task is any one of the at least one task, and the second task is a task other than the first task in the at least one task.

23. An execution device, comprising a processor and a memory, wherein the processor is coupled to the memory;
the memory is configured to store a program; and
the processor is configured to execute the program in the memory, so that the execution device performs the method according to any one of claims 1 to 8.

24. A training device, comprising a processor and a memory, wherein the processor is coupled to the memory;
the memory is configured to store a program; and
the processor is configured to execute the program in the memory, so that the training device performs the method according to any one of claims 9 to 11.

25. A computer-readable storage medium, wherein the computer-readable storage medium stores a program, and when the program is run on a computer, the computer is enabled to perform the method according to any one of claims 1 to 11.

26. A computer program product, wherein the computer program product comprises a program, and when the program is run on a computer, the computer is enabled to perform the method according to any one of claims 1 to 11.
